# EUROPEAN PATENT SPECIFICATION

(11) **EP 2 685 117 B1**
(45) Date of publication and mention of the grant of the patent: **25.12.2019**
(21) Application number: 12755184.4
(22) Date of filing: 08.03.2012
(51) Int. Cl.: F16C 33/76, F16C 19/18, F16C 41/00, B60B 27/00, F16C 43/04, F16C 33/58

(54) **WHEEL HUB ROLLING BEARING ASSEMBLY WITH AN ENCODER AND A SEALING COVER FOR A VEHICLE WHEEL**
RADNABE-WÄLZLAGER-ANORDNUNG MIT EINEM SIGNALGEBER UND EINER DICHTKAPPE FÜR DAS RAD EINES FAHRZEUGS
ENSEMBLE DE ROULEMENT ET DE MOYEU DE ROUE AVEC UN CODEUR ET CAPUCHON D'ÉTANCHÉITÉ POUR UNE ROUE DE VÉHICULE

(30) Priority: 09.03.2011 JP 2011051406; 28.07.2011 JP 2011165061
(43) Date of publication of application: 15.01.2014
(73) Proprietor: NTN Corporation, Osaka-shi, Osaka 550-0003 (JP)
(72) Inventor: SEKI, Makoto, Iwata-shi Shizuoka 438-8510 (JP); ARITAKE, Yasuhiro, Iwata-shi Shizuoka 438-8510 (JP); BABA, Tomoko, Iwata-shi Shizuoka 438-8510 (JP); MITSUISHI, Tadashi, Iwata-shi Shizuoka 438-8510 (JP)
(74) Representative: Cohausz & Florack
(86) International application number: PCT/JP2012/055954
(87) International publication number: WO 2012/121328

(56) References cited:
- EP-A1- 2 098 739
- EP-A1- 2 596 962
- EP-A1- 2 620 294
- EP-A2- 1 431 071
- DE-A1-102006 040 776
- JP-A- 2001 065 704
- JP-A- 2004 084 848
- JP-A- 2006 329 320
- JP-A- 2006 349 009
- JP-A- 2008 164 083
- JP-A- 2010 106 909
- JP-A- 2010 151 279
- JP-A- 2010 180 912
- JP-A- 2011 084 265
- US-A1- 2008 044 120
- US-A1- 2008 310 782

## Description

### Field of the invention

The present invention generally relates to a wheel bearing apparatus which can rotationally support a wheel of a vehicle such as an automobile and is provided with a protecting cover for sealing the inside of the bearing from the outside.

### Description of Background Art

It has been generally known a wheel bearing apparatus which can support a wheel of vehicle with respect to a suspension apparatus and to which is incorporated a rotational speed detecting apparatus for detecting a rotation speed of a wheel of vehicle to control the anti-lock braking system (ABS). Such a bearing apparatus generally comprises a sealing apparatus arranged between inner and outer members rotating relatively to each other via rolling elements contained therebetween and the sealing apparatus is integrally formed with a magnetic encoder having magnetic poles alternately arranged along its circumference. A rotational speed sensor for detecting change of magnetic poles of the magnetic encoder caused by the rotation of a wheel is adapted to be mounted on a knuckle forming part of a suspension apparatus after the wheel bearing apparatus has been mounted on the knuckle.

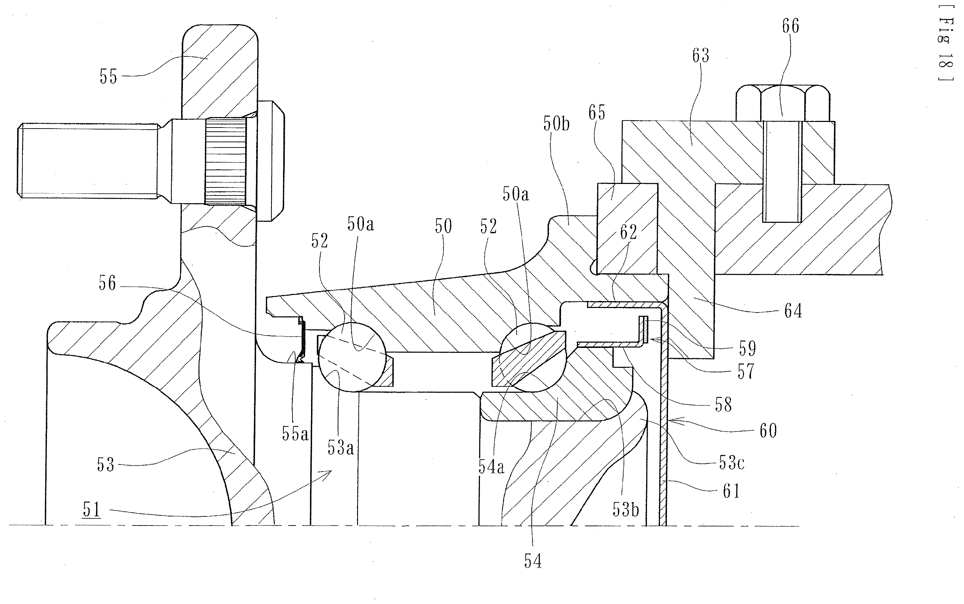

It is known a structure shown in Fig. 18 as one example of the wheel bearing apparatus. This wheel bearing apparatus comprises an outer member 50, an inner member 51, and a plurality of balls 52 contained between the outer member 50 and the inner member 51. The inner member 51 comprises a hub wheel 53 and an inner ring 54 fitted onto the hub wheel 53.

The outer member 50 has, on its outer circumference, an integrally formed body mounting flange 50b and on its inner circumference, double row outer raceway surfaces 50a, 50a. A sensor 63 is secured on the knuckle 65 via a bolt 66.

The hub wheel 53 is integrally formed with a wheel mounting flange 55 for mounting a wheel (not shown) on one end thereof and also formed with an inner raceway surface 53a and a cylindrical portion 53b axially extending from the inner raceway surface 53a. The inner ring 54 is formed, on its outer circumference, with an inner raceway surface 54a and axially immovably secured by a caulked portion 53c formed by plastically deforming the end of the cylindrical portion 53b.

A sealing ring 56 is fitted into the outer end of the outer member 50 and a lip of the sealing ring 56 is slidably contacted with a base portion 55a of the wheel mounting flange 55. On the other hand, an encoder 57 is mounted on the inner end outer circumference of the inner ring 54. The encoder 57 comprises an annular supporting member 58 having an L-shaped longitudinal section and a ring-shaped encoder body 59 adhered to the side of the annular supporting member 58 along its whole periphery. The encoder body 59 has N and S poles alternately arranged along its circumference.

The inner end opening of the outer member 50 is closed by a cover 60. The cover 60 is formed of non-magnetic sheet material such as non-magnetic stainless steel sheet, aluminum alloy sheet or high functional polymer etc. as having a dish-shaped configuration and comprises a disc-shaped closing plate portion 61 and a cylindrical fitting portion 62 formed around a periphery of the closing plate portion 61.

The side face of the encoder body 59 forming the encoder 57 is arranged oppositely and closely to the cover 60 and the detecting portion 64 of the sensor 63 is arranged closely to or abutted against the side of the cover 60. Thus, the detecting portion 64 is arranged oppositely and closely to the encoder body 59 via the cover 60. Accordingly, the presence of the cover 60 enables to prevent entering of water, iron powder or magnetized debris etc. into the space between the sensor 63 and the encoder 57 and thus to prevent damages to the sensor 63 and the encoder 57 as well as cyclic interfere or deterioration of the magnetic properties of the encoder body 59 (see e.g. Patent Document 1 mentioned below).

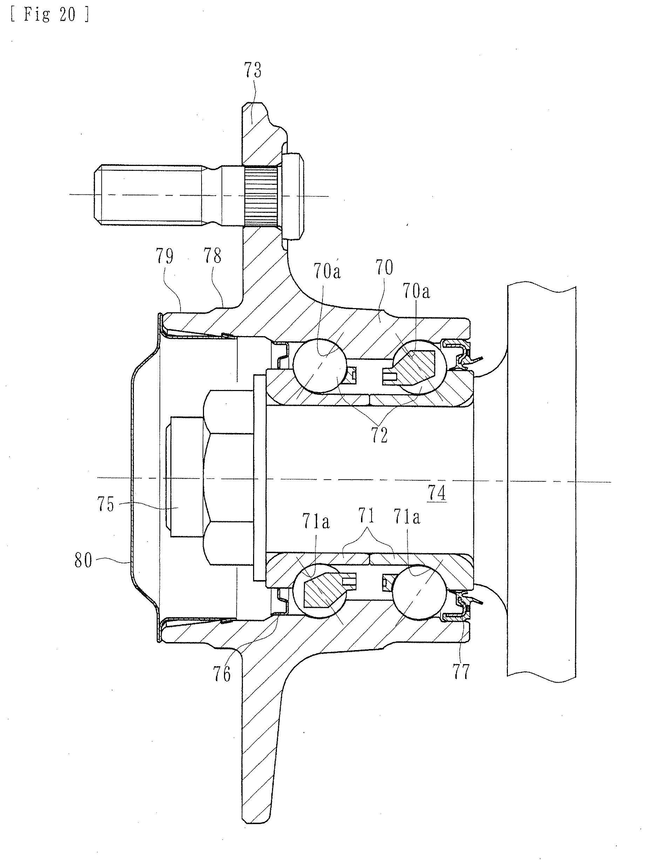

Low cost production and reduction of weight and size for saving fuel consumption of the wheel bearing apparatus have been promoted. In such a wheel bearing apparatus, a hub wheel and a double row rolling bearing are united and a representative example is shown in Fig. 20.

This wheel bearing apparatus comprises an outer member 70, a pair of inner rings 71, 71, and a plurality of balls 72 contained between the outer member 70 and the inner rings 71, 71. The outer member 70 has, on its outer circumference, an integrally formed wheel mounting flange 73 and on its inner circumference, double row outer raceway surfaces 70a, 70a.

The pair of inner rings 71, 71 are fitted onto an axle shaft 74 via a clearance fitting and axially secured thereon by a securing nut 75. A shield 76 and a seal 77 are mounted in annular openings formed between the outer member 70 and the inner rings 71, 71 to prevent leakage of lubricating grease sealed within the bearing and entering of rain water or dusts from the outside into the bearing (The shield 76 forms a labyrinth cooperating with the inner ring 71 to prevent flowing out of lubricating grease.).

The outer member 70 is formed with a brake pilot 78 and a wheel pilot 79 axially extending from the wheel mounting flange 73. The brake pilot 78 is formed as a cylindrical projection coaxial with the outer member 70 and the wheel pilot 79 is formed as having a diameter slightly smaller than that of the brake pilot 78 and split circumferentially to several parts.

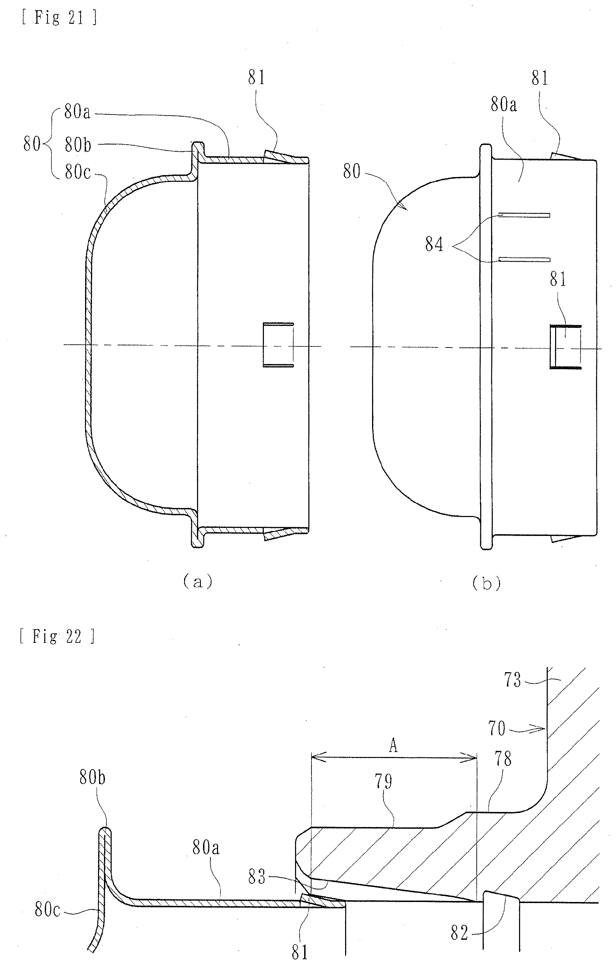

A cap 80 is formed of steel sheet having corrosion resistance by press work to a cup-shaped configuration. As shown in Fig. 21(a), the cap 80 comprises a cylindrical portion 80a, an overlapped portion 80b projected radially outward from the cylindrical portion 80a, and a bottom portion 80c continuously extending from the overlapped portion 80b.

In addition, the cap 80 is formed with a plurality of claws 81 along the circumference of the cylindrical portion 80a, each claw 81 being raked radially outward by a slight angle. On the other hand, an annular groove 82 is formed on an inner circumference of the brake pilot 78 as shown in Fig. 22. The cap 80 can be securely fitted onto the outer member 70 by press-fitting the cap 80 into the opening of the outer member 70 until the overlapped portion 80b is abutted against the end face of the pilot 79 due to spring-back engagement of claws 81 with the annular groove 82. Thus the circumferential inner surface of the pilots 78, 79 can be prevented from corrosion (see e.g. Patent Document 2 mentioned below).

### Documents of Prior Art

### Patent Documents

Patent Document 1: JP 2000-249138 A
Patent Document 2: JP 2007-1341 A

Further wheel bearing apparatuses are known from later published documents JP 2011-084265 A, EP 2 620 294 A1 and EP 2 596 962 A1, as well as from pre-published document EP 1 431 071 A2. The apparatus of the latter document corresponds to a wheel bearing apparatus with the features of the preamble of claim 1. The rolling bearing apparatus of document EP 1 431 071 A2 is provided with a sensor cover made of a nonmagnetic material of aluminum, copper or the like. The cover has a fitting portion and a main body portion with a stepped configuration.

### Disclosure of the invention

### Problems to be solved by the invention

However, there are following problems in these wheel bearing apparatus of the prior art. First of all, in the wheel bearing apparatus shown in figures 18 and 19 (see e.g. Patent Document 1 above), since the cover 60 is secured on the outer member 50 via metal-to-metal fitting, it is impossible to have sufficient sealability in the fitting portion without improving the accuracy and roughness of the fitting surfaces.

In addition, since the cover 60 has a simple "C"-shaped longitudinal section, the rigidity of the cover 60 is insufficient and thus the cover 60 would be deformed by impingement of pebbles and caused to be contacted with the encoder body 59.

Furthermore, since the detecting portion 64 of the sensor 63 is opposed to the encoder 57 via the cover 60, it is necessary to take into consideration not only of the sheet thickness of the cover 60 but air gaps between the encoder 57 and the cover 60 as well as the cover 60 and the sensor 63. This would cause increase of the air gap between the encoder 57 and the sensor 63 and thus reduction of the sensitivity of the sensor 63 and the detection accuracy.

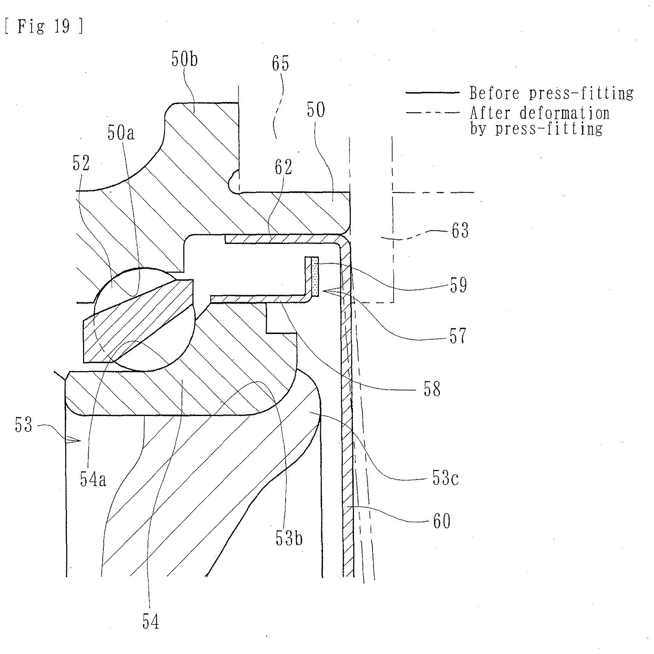

In addition, the closing plate portion 61 of the cover 60 would be sometimes deformed by the press-fitting interference between the cover 60 and the outer member 50 as shown by two dotted lines in Fig. 19. In such a case, it is necessary to previously consider the amount of deformation of the cover 60 and to set a large initial air gap in order to avoid interference between associating parts.

In the wheel bearing apparatus of the prior art shown in figures 20 to 22 (see e.g. Patent Document 2 above) having split-type pilot portions 78, 79, it is possible to prevent the inside of the bearing from getting rusty as well as to inhibit the rust invasion into the pilot portions 78, 79, by securely fixing the cap 80 to the outer member 70, since the cap 80 press fitted into the split-type pilot portions 78, 79 is formed of steel sheet by press-working, it is difficult to have dimensions and roundness of high accuracy of the cylindrical portion 80a. Accordingly the interference of the cylindrical portion 80a of this kind is usually set large such as a range within 0.1 ∼ 0.4 mm to prevent movement and slip-off of the cap 80.

Furthermore, if a width "A" (Fig. 22) of a guiding portion 83 of the pilot portions 78, 79 is insufficient in addition to the large interference of the cylindrical portion 80a, the cap 80 would be sometimes press-fitted into the pilot portions 78, 79 under an inclined condition. This would cause linear damages or scratches 84 (Fig. 21(b)) on the cylindrical portion 80a of the cap 80 during press-fitting thereof. Thus, it is afraid that sealability of the cap 80 would be detracted by the damages or scratches 84 and accordingly the life of the wheel bearing apparatus would be reduced by generation of corrosion due to entrance of rain or muddy water through the fitting portion.

It is, therefore, one object of the present invention to provide a wheel bearing apparatus which can solve problems of prior art described above and thus protect the magnetic encoder by improving the sealability of the fitting portion between the protecting cover and the outer member as well as can improve the accuracy and reliability of rotation speed detection by considering the deformation of the protecting cover and limiting the increase of air gap.

It is another object of the present invention to provide a wheel bearing apparatus which can improve the sealability of the fitting portion by preventing generation of damages or scratches during press-fitting operation and can improve the workability in press-fitting with presetting the protecting cover prior to press-fitting thereof.

### Means for solving problems

For achieving the objects mentioned above, there is provided, according to the present invention of claim 1, a wheel bearing apparatus comprising an outer member integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the hub wheel and the inner ring being formed on their outer circumferences respectively with double row inner raceway surfaces opposing to the double row outer raceway surfaces; double row rolling elements freely rollably contained between the inner raceway surfaces and outer raceway surfaces of the inner member and outer member; a pulser ring fitted onto the outer circumference of the inner ring; a seal mounted on the outer-side end of the outer member and a protecting cover mounted on the inner-side end of the outer member in order to close and seal annular openings formed between the outer member and the inner member at their both ends; and the protecting cover being formed of non-magnetic steel sheet as having a cup-shaped configuration by press working and comprises a cylindrical fitting portion press-fitted into the inner circumference of the inner-side end of the outer member, a disc-shaped shielding portion extending radially inward from the fitting portion via a radially reducing portion and the inner-side surface of the shielding portion being adapted to be arranged closely to or in contact with a rotation speed detecting sensor, and a bottom portion continuous to the shielding portion via a stepped portion to close the inner-side end of the inner member; characterized in that a full deflection of the side surface of the shielding portion caused by a load same as that applied to the protecting cover when it is press-fitted into the outer member is limited to a predetermined value or less, wherein the allowable limitation of the full deflection of the shielding portion of the protecting cover is 0.15 mm or less, and wherein the shielding portion of the protecting cover is formed so that it is inclined toward the outer-side by a predetermined inclined angle such that the radially inward end of the shielding portion is closer to the outer-side.

According to the wheel bearing apparatus of claim 1, since the protecting cover is formed of non-magnetic steel sheet as having a cup-shaped configuration by press working and comprises a cylindrical fitting portion press-fitted into the inner circumference of the inner-side end of the outer member, a disc-shaped shielding portion extending radially inward from the fitting portion via a radially reducing portion and the inner-side surface of the shielding portion being adapted to be closely arranged or in contact with a rotation speed detecting sensor, and a bottom portion continuous to the shielding portion via a stepped portion to close the inner-side end of the inner member; and a full deflection of the side surface of the shielding portion caused by a load same as that applied to the protecting cover when it is press-fitted into the outer member is limited to a predetermined value or less, it is possible to increase the rigidity of the protecting cover by providing the stepped longitudinal section on the protecting cover and thus to suppress deformation of the protecting cover due to impingement of pebble etc. as well as to improve the accuracy and reliability of rotation speed detection by considering the deformation of the protecting cover and limiting the increase of air gap.

Since the allowable limitation of the full deflection of the shielding portion of the protecting cover is 0.15 mm or less, it is possible to set a minimum air gap and thus to further improve the detection accuracy.

Since the shielding portion of the protecting cover is formed so that it is inclined toward the outer-side by a predetermined inclined angle such that the radially inward end of the shielding portion is closer to the outer-side, it is possible to assure a desirable geometrical accuracy even if the shielding portion is bulged toward the inner-side by the press-fitting interference relative to the outer member when the protecting cover is press-fitted into the outer member.

The radially reducing portion of the protecting cover may be a stepped configuration in its longitudinal section as defined in claim 2, and the radially reducing portion of the protecting cover may be tapered so that its radius is gradually reduced toward the inner-side direction as defined in claim 3.

If a sealing member is integrally adhered to the outer circumference of the radially reducing portion of the protecting cover, the sealing member comprises an annular portion having an outer diameter slightly smaller than an outer diameter of the fitting portion of the protecting cover and a projected portion having an outer diameter larger than that of the fitting portion, and the projected portion is press-fitted into the inner circumference of the end of the outer member via a predetermined interference as defined in claim 4, it is possible to improve the sealability of the fitting surfaces of the outer member and the protecting cover.

If the dimension of the sealing member is set so that it does not project beyond the inner-side surface of the shielding portion of the protecting cover as defined in claim 5, it is unnecessary to separate the rotation speed detecting sensor from the magnetic encoder a distance more than necessity and thus possible to set a minimum air gap to improve the detecting accuracy.

If the fitting volume of the projected portion of the sealing member is set so that it is smaller than a volume of an annular space formed between the annular portion of the sealing member and the inner circumference of the outer member under a condition in which a press-fitting tool is abutted against the sealing member as defined in claim 6, it is possible to prevent the sealing member from being damaged even if the projected portion of the sealing member is bulged by compression since the annular portion of the sealing member allows escaping space for the projected portion of the sealing member.

If the inner diameter of the end of the fitting portion of the protecting cover is set so that is smaller than the outer diameter of the inner-side end surface of the sealing member as defined in claim 7, it is possible to have the sealing member to be surely abutted by the end of the fitting portion of the protecting cover and thus to form a nest of the protecting covers which improves the workability in the manufacturing step.

If a sheet thickness of the shielding portion of the protecting cover is smaller than a sheet thickness of the other portions as defined in claim 8, it is possible to set a minimum air gap between the detecting portion of the sensor and the magnetic encoder to improve the detecting accuracy.

If a stepped portion recessed from the shielding portion is formed between the shielding portion and the radially reducing portion of the protecting cover, it is possible to assure desirable detecting accuracy since the bulged out sealing member does not give any influence to the shielding portion against which the rotation speed detecting sensor is abutted or closely arranged.

If a thinned portion is formed between the shielding portion and radial reducing portion of the protecting cover, it is possible to set a minimum air gap between the rotation speed detecting sensor and the magnetic encoder to improve the detecting accuracy.

If an inner-side end surface of the outer member is slightly projected from a large end surface of the inner ring toward the inner-side, it is possible to prevent the protecting cover from being abutted against the inner ring.

If the magnetic encoder is arranged so that its detecting surface is substantially flush with the large end surface of the inner ring or it is slightly projected from the large end surface of the inner ring toward the inner-side, it is possible to achieve easy adjustment of the air gap and thus to set the air gap as small as possible.

If adhesive or liquid sealant is applied on the fitting portion of the protecting cover, it is possible to improve the sealability of the fitting portions between the protecting cover and the outer member without strictly limit the dimensional accuracy of the protecting cover and the outer member.

If the sealing member is formed of rubber material having the compression set of physical properties of rubber of 40% or less at 120°C×70 hours and the TR10 value of -35°C or less, strain recovering ability of the sealing member can be remarkably improved and thus desirable sealing performance can be maintained.

If either one of fitting surfaces of the protecting cover and the outer member is formed with a step in a radial direction as defined in claim 9, it is possible to preset the protecting cover under a coaxially aligned condition when the protecting cover is press-fitted into the outer member. Thus, it is possible to provide a wheel bearing apparatus which can improve the sealability of the fitting portion with preventing generation of damages or scratches during press-fitting operation and can improve the workability in press-fitting operation.

It is preferable that the height of the step may be within a range of 0.15 ∼ 0.30 mm as defined in claim 10. This enables to form a preferable guiding gap during press-fitting of the protecting cover and thus to improve the workability of the press-fitting operation.

It is preferable that the step may be formed on the end of the fitting portion of the protecting cover by a press work as defined in claim 11, and that the outer diameter of the step may be smaller than the inner diameter of the fitting surface of the outer member.

If the end of the fitting portion is formed as a small diameter portion having a diameter smaller than the outer diameter of the fitting portion by the height of the step as defined in claim 12, it is possible to preset the protecting cover under a coaxially aligned condition of the protecting cover when the protecting cover is press-fitted into the outer member and thus to improve the workability in press-fitting operation.

If a width of the step of the protecting cover is larger than a width of a chamfered portion end of the outer member as defined in claim 13, it is possible to preset the protecting cover under an attitude controlled condition of the protecting cover when the protecting cover is press-fitted into the outer member and thus to further improve the workability in press-fitting operation.

It is preferable that a guiding portion may be formed on the inner circumference of the end of the outer member, and that an inner diameter of the guiding portion may be larger than an outer diameter of the fitting portion of the protecting cover.

If a transition portion between the fitting surface and the guiding portion of the outer member is formed as having a circular-arc longitudinal section having a predetermined radius of curvature, and the outer raceway surfaces, fitting surface and transitional portion are simultaneously ground by a formed grinding wheel as defined in claim 15, it is possible to improve the dimensional accuracy and coaxiality of the protecting cover and the outer member and thus to further improve the workability of press-fitting operation of the protecting cover.

If the pulser ring is formed of steel sheet by press work and comprises a cylindrical fitting portion press-fitted onto the outer circumference of the inner ring, an annular supporting member, and the magnetic encoder formed of elastomer into which ferritic magnetic powder is mingled so that N and S poles are alternately arranged along its circumference, wherein the magnetic encoder is arranged to be opposed by the rotation speed detecting sensor via a predetermined axial gap through the protecting cover, and either one of fitting surfaces of the annular supporting member and the inner ring is formed with a step in a radial direction, it is possible to preset the pulser ring under a coaxially aligned condition when the pulser ring is press-fitted onto the inner ring. Thus, it is possible to improve the sealability of the fitting portion with preventing generation of damages or scratches during press-fitting operation of the pulser ring and to improve the workability in press-fitting operation.

It is preferable that the step may be formed on the end of the fitting portion of the annular supporting member by a press work, and that the inner diameter of the step may be larger than the outer diameter of the inner ring.

If a width of the step of the annular supporting member is larger than a width of the chamfered portion, it is possible to preset the pulser ring under an attitude controlled condition of the pulser ring when the pulser ring is press-fitted onto the inner member and thus to further improve the workability in press-fitting operation of the pulser ring.

If the perpendicularity of the magnetic encoder relative to the fitting portion of the annular supporting member is limited to 0.30 mm or less, it is possible to preset the pulser ring under an attitude controlled condition of the pulser ring when the pulser ring is press-fitted onto the inner member.

If a guiding portion is formed on the outer circumference of the end of the inner ring, and an outer diameter of the guiding portion is larger than an outer diameter of the inner ring, it is possible to preset the pulser ring under a coaxially aligned condition when the pulser ring is press-fitted onto the inner ring. Thus, it is possible to improve the sealability of the fitting portion by preventing generation of damages or scratches during press-fitting operation of the pulser ring and to improve the workability in press-fitting operation.

If an outer diameter of the fitting portion of the annular supporting member is larger than an inner diameter of the magnetic encoder, it is possible to have the magnetic encoder to be surely abutted by the end of the fitting portion of the annular supporting member and thus to form a nest of the magnetic encoders which improves the workability in the manufacturing step.

If a transition portion between the outer circumference of the inner ring and the guiding portion of the inner ring is formed as having a circular-arc longitudinal section having a predetermined radius of curvature, and the inner raceway surface of the inner ring, outer circumference and transitional portion are simultaneously ground by a formed grinding wheel, it is possible to improve the dimensional accuracy and coaxiality of the pulser ring and the inner ring and thus to further improve the workability of press-fitting operation of the pulser ring.

### Effects of the invention

According to the wheel bearing apparatus of the present invention, since it comprises the features of claim 1, it is possible to increase the rigidity of the protecting cover by providing the stepped longitudinal section on the protecting cover and thus to suppress deformation of the protecting cover due to impingement of pebble etc. as well as to improve the accuracy and reliability of rotation speed detection with considering the deformation of the protecting cover and limiting the increase of air gap.

### Brief Description of the Drawings

- [Fig.1]: A longitudinal-sectional view of a first embodiment of a wheel bearing apparatus of the present disclosure;
- [Fig. 2]: A partially enlarged view showing a detecting portion of Fig. 1;
- [Fig.3]: A longitudinal-sectional view showing a protecting cover of the present invention;
- [Fig.4]: An explanatory view showing the accuracy assurance in accordance with the invention of the protecting cover of Fig. 3;
- [Fig.5]: A partially enlarged view showing an illustrative modification of the protecting cover of Fig. 3;
- [Fig.6(a)]: A partially enlarged view showing another illustrative modification of the protecting cover of Fig. 3;
- [Fig.6(b)]: A partially enlarged view showing a further illustrative modification of the protecting cover of Fig. 3;
- [Fig.7]: A longitudinal-sectional view of a second embodiment of an illustrative wheel bearing apparatus of the present disclosure;
- [Fig.8]: A partially enlarged view showing a condition in which the protecting cover and pulser ring of Fig. 7 are mounted;
- [Fig.9(a)]: An explanatory view showing the preset of the protecting cover of Fig. 8;
- [Fig.9(b)]: An explanatory view showing the preset of the pulser ring of Fig. 8;
- [Fig.10(a)]: A partially enlarged view showing a modification of the protecting cover of Fig. 8;
- [Fig.10(b)]: A partially enlarged view showing a preset of the protecting cover of Fig. 10(a);
- [Fig.11(a)]: A partially enlarged sectional view showing the protecting cover of Fig. 8;
- [Fig.11(b)]: An explanatory view showing nest of the protecting cover;
- [Fig.11(c)]: A partially enlarged view of Fig.11(b);
- [Fig.12(a)]: A longitudinal sectional view of a modification of the pulser ring of Fig. 8;
- [Fig.12(b)]: A partially enlarged sectional view of Fig. 12(a);
- [Fig.13(a)]: A partially enlarged sectional view showing the pulser ring of Fig. 8;
- [Fig.13(b)]: An explanatory view showing nest of the pulser ring of Fig.13(a);
- [Fig.13(c)): A partially enlarged view of Fig.13(b);
- [Fig.14(a)]: An explanatory view showing the accuracy of the protecting cover of Fig. 8;
- [Fig.14(b)]: An explanatory view showing the accuracy of the pulser ring of Fig. 8;
- [Fig.15]: A longitudinal-sectional view of a third embodiment of an illustrative wheel bearing apparatus of the present disclosure:
- [Fig.16(a)]: An explanatory view showing a preset of the protecting cover of Fig. 15;
- [Fig.16(b)]: An explanatory view showing a preset of the pulser ring of Fig. 15;
- [Fig.17(a)]: An explanatory view showing a method for processing the outer member of Fig. 15;
- [Fig.17(b)]: An explanatory view showing a method for processing the inner ring of Fig. 15;
- [Fig.18]: A longitudinal-sectional view of a wheel bearing apparatus of the prior art;
- [Fig.19]: A partially enlarged view showing a condition in which the cover of Fig. 18 is press-fitted;
- [Fig.20]: A longitudinal-sectional view of another wheel bearing apparatus of the prior art;
- [Fig.21(a)]: A longitudinal-sectional view of the cap of Fig. 20;
- [Fig.21(b)]: A side elevation view of the cap after being press-fitted; and
- [Fig.22]: An explanatory view showing a condition of press-fitting of the protecting cover of Fig. 21.

### First Embodiment

A first embodiment of the present disclosure will be described with reference to the accompanied drawings.

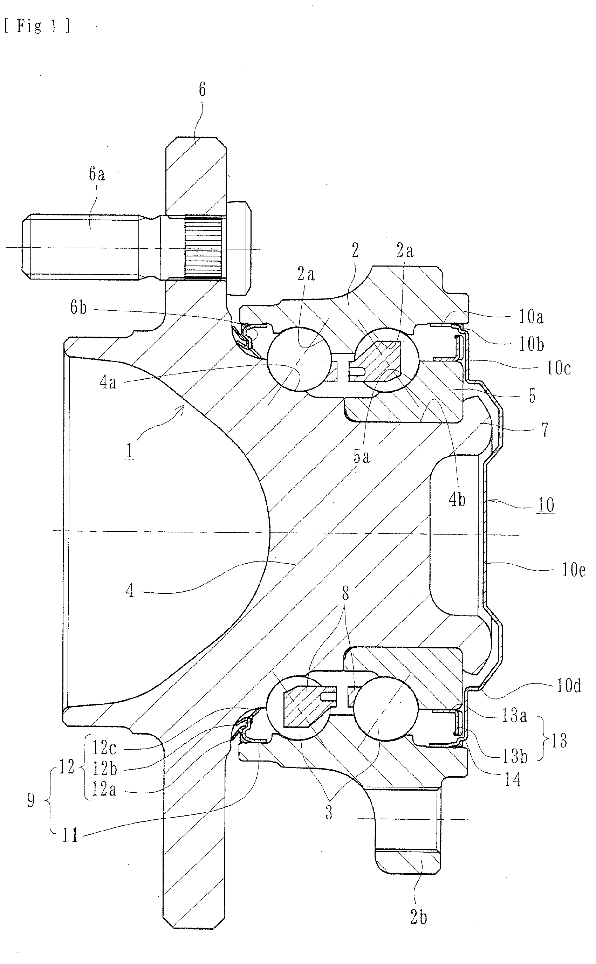

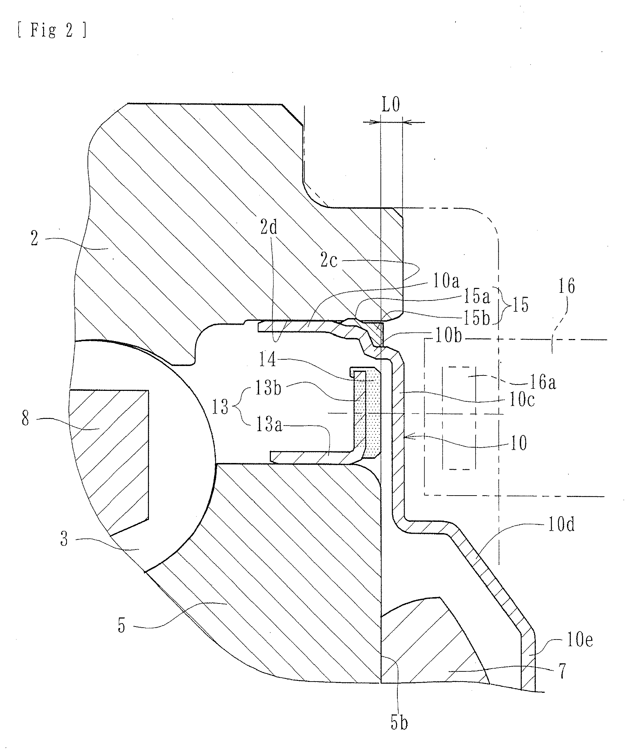

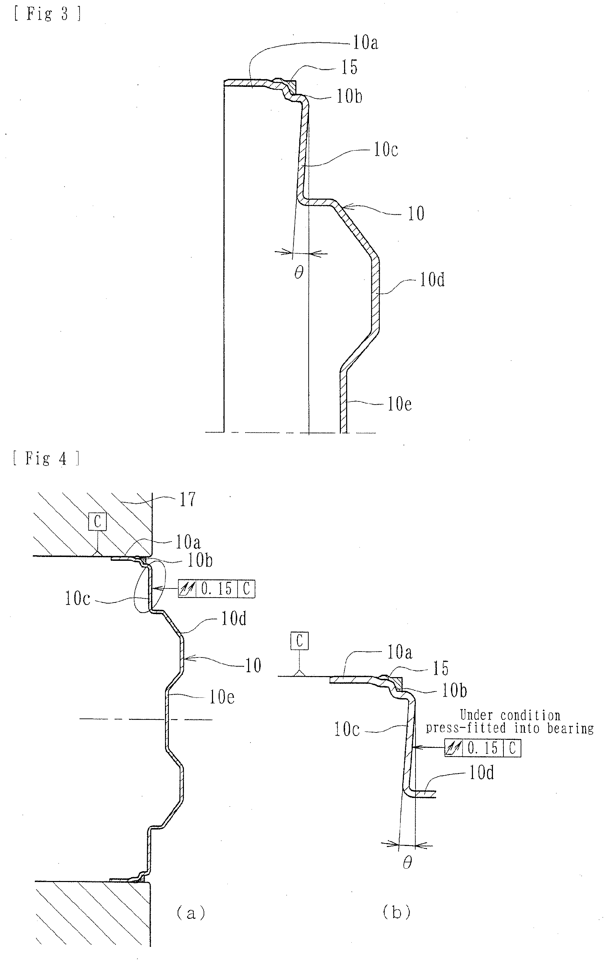

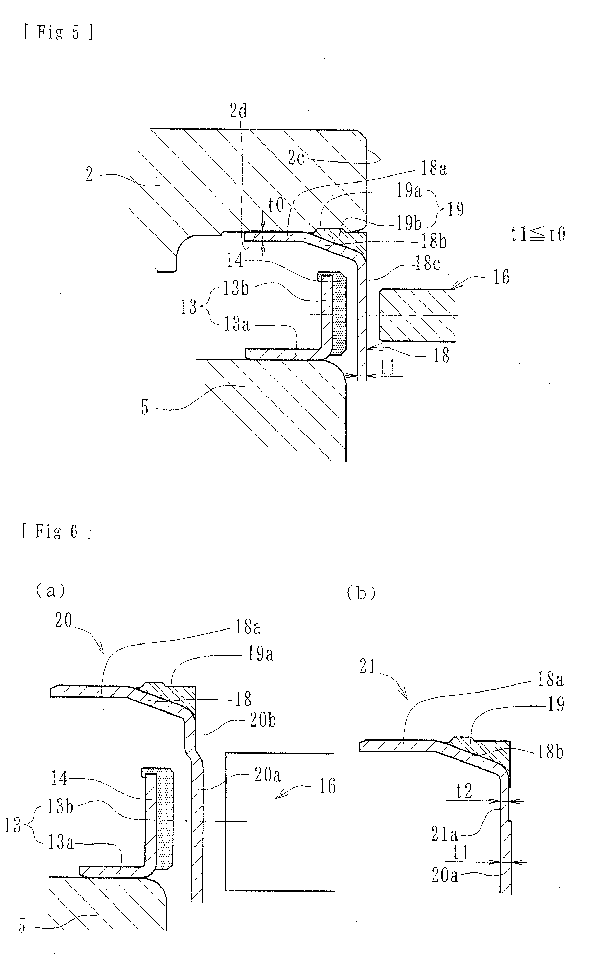

Fig.1 is a longitudinal-sectional view of a first embodiment of a wheel bearing apparatus of the present disclosure; Fig. 2 is a partially enlarged view showing a detecting portion of Fig. 1; Fig.3 is a longitudinal sectional view showing a protecting cover in accordance with the present invention; Fig.4 is an explanatory view showing the accuracy assurance of the protecting cover of Fig. 3; Fig.5 is a partially enlarged view showing an illustrative modification of the protecting cover of Fig. 3; Fig.6(a) is a partially enlarged view showing another illustrative modification of the protecting cover of Fig. 3; and Fig.6(b) is a partially enlarged view showing a further illustrative modification of the protecting cover of Fig. 3. In the description below, an outer-side of a bearing apparatus when it is mounted on a vehicle is referred to as "outer-side" (a left side in a drawing), and an inner-side of a bearing apparatus when it is mounted on a vehicle is referred to as "inner side" (a right side in a drawing).

The wheel bearing apparatus of the present disclosure is a so-called "third generation" type for a driven wheel and comprises an inner member 1, an outer member 2, and double row rolling elements (balls) 3, 3 freely rollably contained between the inner and outer members 1 and 2. The inner member 1 includes the hub wheel 4 and an inner ring 5 press-fitted onto the hub wheel 4 via a predetermined interference.

Outer member 2 is formed of medium-high carbon steel such as S53C including carbon of 0.40 ∼ 0.80% by weight and is formed, on its outer circumference, with body mount flange 2b adapted to be mounted on a knuckle (not shown) and also formed, on its inner circumference, with double row outer raceway surfaces 2a, 2a. These double row outer raceway surfaces 2a, 2a is hardened by high frequency induction hardening as having a surface hardness of 58 ∼ 64 HRC.

The hub wheel 4 is integrally formed, on its outer-side end, with a wheel mount flange 6 for mounting a wheel (not shown), and hub bolts 6a are secured on the wheel mounting flange 6 at circumferentially equidistant positions. In addition, the hub wheel 4 is formed, on its outer circumference, with one (outer-side) inner raceway surface 4a from which axially extends a cylindrical portion 4b on which the inner ring 5 is press-fitted via a predetermined interference. The inner ring 5 is axially secured on the hub wheel 4 with being applied a predetermined bearing pre-pressure by a caulked portion 7 formed by plastically deforming the end of the cylindrical portion 4b radially outward. An inner-side inner raceway surface 5a is formed on the outer circumference of the inner ring 5.

The double row rolling elements 3, 3 are contained between the double row outer raceway surfaces 2a, 2a of the outer member 2 and the double row inner raceway surfaces 4a, 5a and rollably held therein by cages 8, 8. Annular openings are formed between the outer member 2 and the inner member 1. A seal 9 is mounted on the outer-side opening and a magnetic encoder 14 and protecting cover 10 are mounted on the inner-side opening in order to close and seal annular openings and to prevent leakage of lubricating grease sealed within the bearing and entering of rain water or dusts from the outside into the bearing.

The hub wheel 4 is made of medium-high carbon steel such as S53C including carbon of 0.40 ∼ 0.80 % by weight and is hardened by high frequency induction hardening as having a surface hardness of 58 ∼ 64 HRC over the inner raceway surface 4a and a region from an inner-side base 6b of the wheel mounting flange 6 to the cylindrical portion 4b. The caulked portion 7 is not hardened and kept to hardness after forging. This enables to make the caulking work easy and to prevent generation of micro cracks during machining. In addition, not only the frictional resistance of the base 6b forming a seal land portion of the seal 9 can be improved but the durability of the hub wheel 4 can be also improved due to increase of mechanical strength against the rotary bending applied to the wheel mounting flange 6. The inner ring 5 and the rolling elements 3 are formed of high carbon chrome steel such as SUJ2 and dipping hardened to their cores as having hardness of 58 ∼ 64 HRC.

Although it is shown herein the wheel bearing apparatus formed by a double row angular contact ball bearing using balls as rolling elements 3, the present disclosure is not limited to such a bearing and may be a double row tapered roller bearing using tapered rollers as rolling elements 3. In addition, although it is shown herein the bearing of third generation type, the present disclosure can be applied to first and second generation type bearings (not shown) in which a pair of inner rings are press-fitted onto the cylindrical portion of the hub wheel.

Seal 9 is formed as an integrated seal comprising a core metal 11 press-fitted into the outer-side end of the outer member 2 via a predetermined interface and a sealing member 12 adhered to the core metal 11 by vulcanizing adhesion. The core metal 11 is press-formed of austenitic stainless steel sheet (JIS SUS 304 etc.) or cold rolled steel sheet (JIS SPCC etc.)

On the other hand, the sealing member 12 is formed of synthetic rubber such as NBR (acrylonitrile-butadiene rubber) and comprises a side lip 12a inclined radially outward and slide-contacting with the inner-side surface of the wheel mounting flange 6 via a predetermined interference, a dust lip 12b slide-contacting with the base 6b of circular arc section via a predetermined interference, and a grease lip 12c inclined toward the inside of the wheel bearing and slide-contacting with the base 6b of circular arc section via a predetermined interference. The grease lip 12c may be a non-contact type.

There are examples of material of sealing member 12 other than NBR such as HNBR (hydrogenated acrylonitrile-butadiene rubber), EPDM (ethylene propylene rubber), ACM (poly-acrylic rubber) superior in heat and chemical resistance, FKM (fluororubber) or silicone rubber.

An annular supporting member 13 of a L-shaped longitudinal section is press-fitted onto the outer circumference of the inner ring 5. The supporting member 13 comprises a cylindrical portion 13a press-fitted onto the outer circumference of the inner ring 5 and a standing portion 13b extending radially outward from the cylindrical portion 13a. A magnetic encoder 14 is integrally adhered to the inner-side surface of the standing portion 13b by vulcanizing adhesion. The magnetic encoder 14 is formed of elastomer such as synthetic rubber into which ferritic magnetic powder is mingled so that N and S poles are alternately arranged along its circumference.

Although it is shown herein a pulser ring having the magnetic encoder 14 comprising rubber magnet, it is possible to use other kinds of encoders such as a pulser ring of steel sheet formed with a plurality of through apertures or irregularities or formed of sintered alloy or that to which plastic magnet plate is adhered.

The annular supporting member 13 is formed of a steel plate such as ferritic stainless steel sheet (JIS SUS 430 etc.) or preserved cold rolled steel sheet (JIS SPCC etc.) by press working. Accordingly, it is possible to prevent generation of corrosion on the supporting member 13 and to assure a magnetic output of the magnetic encoder 14 having a strong and stable detecting accuracy.

A protecting cover 10 mounted on the inner-side end of the outer member 2 is formed of non-magnetic austenitic stainless steel sheet (JIS SUS 304 etc.) by press working as having a dish-shaped configuration. As shown in Figs. 2, the protecting cover 10 comprises a cylindrical fitting portion 10a press-fitted into the end inner circumference of the outer member 2, a disc-shaped shielding portion 10c extending radially inward from the fitting portion 10a via a radially reducing portion 10b, and a bottom portion 10e continuous from the shielding portion 10c via a stepped portion 10d to close the inner-side end of the inner member 1. A detecting portion 16a of the rotation speed sensor 16 is arranged near to or in contact with the shielding portion 10c of the protecting cover 10 oppositely to the magnetic encoder 14 at a predetermined air gap (axial gap) via the protecting cover 10. Such a stepped sectional configuration enables to increase the rigidity of the protecting cover 10 and thus to suppress deformation of the protecting cover 10 due to impingement of pebble etc. In addition, since the protecting cover 10 is formed of non-magnetic material, adverse effect is not caused on the magnetic flux, and durability can be assured for a long term.

According to this embodiment, the radially reducing portion 10b has the stepped sectional configuration and a sealing member 15 is secured to the outer circumference of the radially reducing portion 10b. The sealing member 15 is formed of synthetic rubber such as NBR (acrylonitrile-butadiene rubber) and integrally adhered to the protecting cover 10 by vulcanizing adhesion and comprises a projected portion 15a and an annular portion 15b. The annular portion 15b is formed as having a diameter slightly smaller than the outer diameter of the fitting portion 10a and the projected portion 15a is formed as having a diameter slightly larger than the outer diameter of the fitting portion 10a and press-fitted into the end inner circumference 2d of the outer member 2 via a predetermined interference. The provision of the sealing member 15 enables to improve the sealability of the fitting surfaces between the outer member 2 and the protecting cover 10. Also in this case, there are examples of material of sealing member 12 other than NBR such as HNBR (hydrogenated acrylonitrile-butadiene rubber), EPDM (ethylene propylene rubber), ACM (poly-acrylic rubber) superior in heat and chemical resistance, FKM (fluororubber) or silicone rubber.

The sealing member 15 is formed of rubber material having the compression set of physical properties of rubber of 40% or less at 120°C x70 hours and the TR10 value (extension rate: 50%) of -35°C or less. This improves strain recovering ability of the sealing member 15 even at a low temperature and thus desirable sealing performance can be maintained. The TR10 value means a temperature at which 10% recovery of a previously applied strain of material is attained and a value near the TR10 value has been empirically used as the low temperature limit value.

The fitting volume of the projected portion 15a of the sealing member 15 is set so that it is smaller than a volume of an annular space formed between the annular portion 15b of the sealing member 15 and the inner circumference (fitting surface) 2d of the outer member 2. That is, if the projected portion 15a of the sealing member 15 is bulged to the inner-side by compression, the annular portion 15b of the sealing member 15 can form an escaping space for receiving the projected portion 15a of the sealing member 15 to prevent the sealing member 15 from being bulged out from the inner-side surface of the shielding portion 10c. In addition, a compression rate of the projected portion 15a is limited to 45 % or less. Accordingly, it is possible to prevent the sealing member 15 from being damaged by being projected from the end face 2c of the outer member 2 during press-fitting of the protecting cover 10 or to prevent interference of the sealing member 15 with the rotation speed sensor 16 due to its projection from the inner-side surface of the shielding portion 10c.

If the compression rate of the projected portion 15a of the sealing member 15 exceeds 45%, difficulty of the press-fitting operation will be increased, and elasticity of the material of the sealing member 15 and sealability will be reduced due to the damage during press-fitting operation.

According to this embodiment, the inner-side end surface 2c of the outer member 2 is projected by a small distance L0 from a large end surface 5b of the inner ring 5 toward the inner-side, In addition, the shielding portion 10c of the protecting cover 10 and the end face 2c of the outer member 2 are substantially coplanar as well as the detecting surface of the magnetic encoder 14 and the large end surface 5b of the inner ring 5 are also substantially coplanar. This makes it possible to prevent the protecting cover 10 from being abutted against the inner ring 5. In addition, if the detecting surface of the magnetic encoder 14 and the large end surface 5b of the inner ring 5 is substantially coplanar or slightly projected from the large end surface 5b of the inner ring 5, it is possible to accurately position the protecting cover 10 on the basis of the end face 2c of the outer member 2, and position the annular supporting member 13 on the basis of the large end surface 5b of the inner ring 5. Thus, adjustment of the air gap can be easily achieved and the detecting accuracy can be improved.

When the protecting cover 10 is mounted on the outer member 2, since only the fitting portion 10a of the protecting cover 10 is press-fitted into the outer member 2, the disc-shaped shielding portion 10c is sometimes deformed due to the press-fitting interference between the protecting cover and the outer member 2 so that the shielding portion 10c is bulged toward the inner-side. Accordingly, the shielding portion 10c of the protecting cover 10 in accordance with the invention is formed so that it is inclined toward the outer-side by a predetermined inclined angle θ.

The accuracy (geometrical interference) control and accuracy assurance of each portion of the protecting cover 10 can be performed under a condition in which the fitting portion 10a is chucked by a press-fitting tool 17 as shown in Fig. 4(a). In particular as shown in Fig. 4(b), the allowable limitation of the full deflection of the shielding portion 10c (to which the rotation speed sensor 16 and the magnetic encoder 14 are opposed) of the protecting cover 10 in accordance with the invention is 0.15 mm or less. In this case, the applied load to the press-fitting tool 17 is set to a load same as the fitting load actually applied to the outer member 2.

The rotational speed sensor 16 is formed of injection moldable synthetic resin such as PA66 in which an IC circuit incorporated with a Hall element, a magnetic resistance element (MR element), and a waveform shaping circuit for shaping the output waveform of the magnetic detecting element (not shown) are embedded and forms the ABS of an automobile for detecting the rotational speed of a wheel and controlling it.

Fig. 5 shows an illustrative modification of the protecting cover 10. This protecting cover 18 is different only in the structure of the fitting portion and substantially same as the protecting cover 10. Accordingly same reference numerals are used for designating the same structural elements.

The protecting cover 18 is formed of non-magnetic austenitic stainless steel sheet (JIS SUS 304 etc.) by press working as having a dish-shaped configuration and comprises a cylindrical fitting portion 18a press-fitted into the end inner circumference of the outer member 2, and a disc-shaped shielding portion 18c extending radially inward from the fitting portion 18a via a radially reducing portion 18b.

The radially reducing portion 18b of the protecting cover 18 is tapered so that its radius is gradually reduced toward the inner-side direction and a sealing member 19 is integrally adhered to the outer circumference of the radially reducing portion 18b via vulcanizing adhesion. A fitting volume of the projected portion 19a of the sealing member 19 is set so that it is smaller than a volume of an annular space formed between the annular portion 19b of the sealing member 19 and the inner circumference of the outer member 2 under a condition in which a press-fitting tool is abutted against the sealing member 19 so that the end face of the sealing member 19 is not projected from the inner-side side surface of the shielding portion 18c. In addition, the sheet thickness t1 of the shielding portion 18c of the protecting cover 18 is smaller than the sheet thickness t0 of the fitting portion 18a (t1≤t0) and adhesive is adhered to the fitting portion 18a. This makes it possible to set a small air gap and to improve the sealability between the outer member 2 and the fitting portion 18a without strictly limiting the dimensional accuracy of the protecting cover 18 and the outer member 2. Examples of the adhesive are those of epoxy resin, phenol resin, polyurethane families or polyethylene families.

Liquid sealing agent may be applied between the fitting portion 18a of the protecting cover 18 and the fitting surface 2d of the outer member 2 in place of the adhesive. The liquid sealing agent is called as "liquid gasket" of non-drying paste comprising denaturation ester resin as main component and can seal gap between the protecting cover 18 and the outer member 2 without being peeled therefrom due to the press-fitting of the protecting cover 18 (trade name: "Three Bond 1121"). In addition, since the liquid sealing agent also has stickiness, it is able to keep fixation of the protecting cover 18 for a long term and thus to improve the reliability of the wheel rotation detection with preventing entering of rain water or dusts into the detecting portion. It is possible to use liquid sealing agents comprising phenol, acrylic or silicone family resins as main component other than the liquid sealing agent comprising denaturation ester resin as main component.

A protecting cover 20 shown in Fig. 6(a) comprises the cylindrical fitting portion 18a, the disc-shaped shielding portion 20a extending radially inward from the fitting portion 18a via the radially reducing portion 18b, and a stepped portion 20b recessed from the shielding portion 20a toward the outer-side between the shielding portion 20a and the radially reducing portion 18b. This makes it possible to prevent the shielding portion 20a (to which the rotation speed detecting sensor 16 is contacted or closely arranged) from being influenced by the sealing member 19 which would be bulged out during vulcanizing adhesion and thus to assure a desirable detecting accuracy.

A protecting cover 21 shown in Fig. 6(b) comprises the cylindrical fitting portion 18a, the disc-shaped shielding portion 20a extending radially inward from the fitting portion 18a via the radially reducing portion 18b, and a thinned portion 21a formed between the shielding portion 20a and radial reducing portion 18b. The sheet thickness t2 of the thinned portion 21a is thinner than the sheet thickness t1 of the shielding portion 20a (t2≤t1). This makes it possible to set a minimum air gap between the rotation speed detecting sensor 16 and the magnetic encoder 14 to further improve the detecting accuracy.

### Second Embodiment

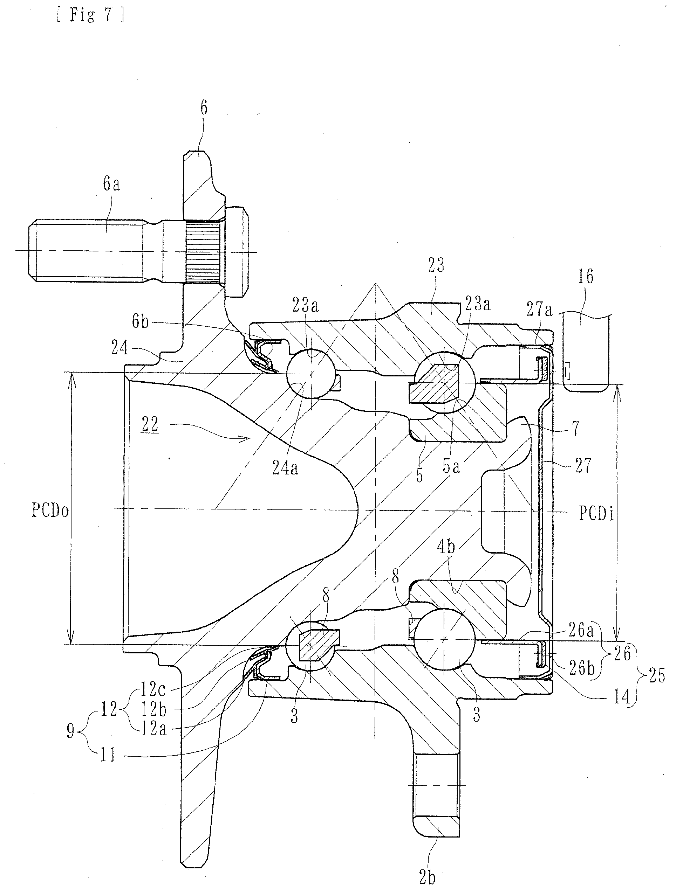

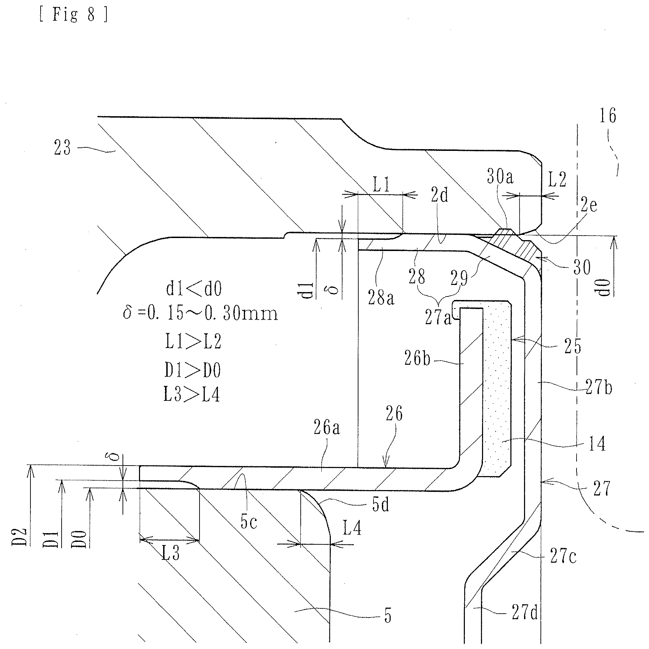

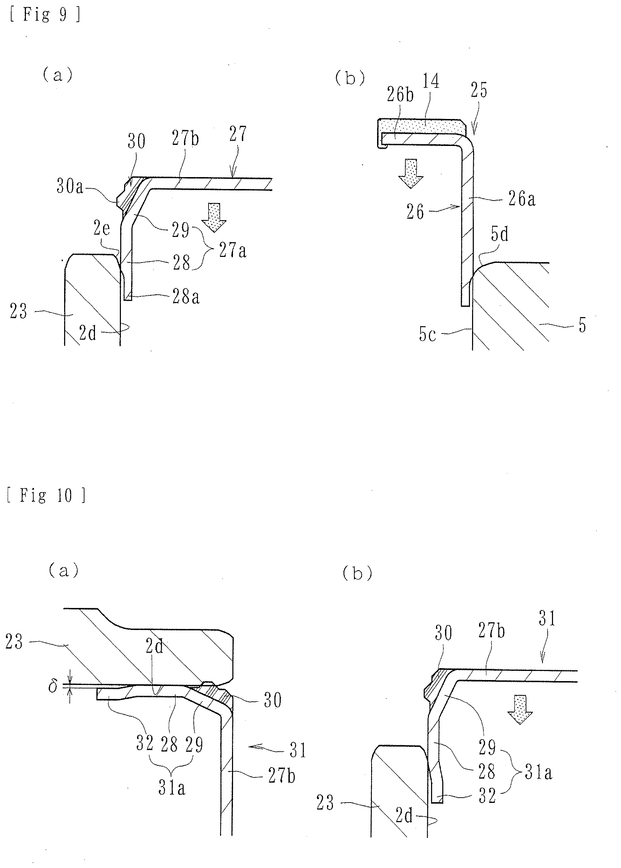

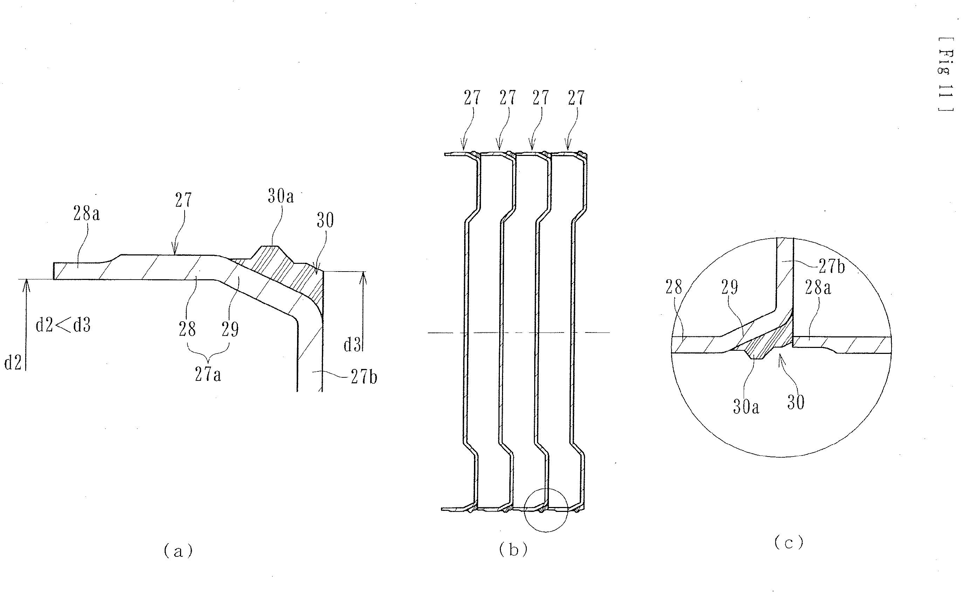

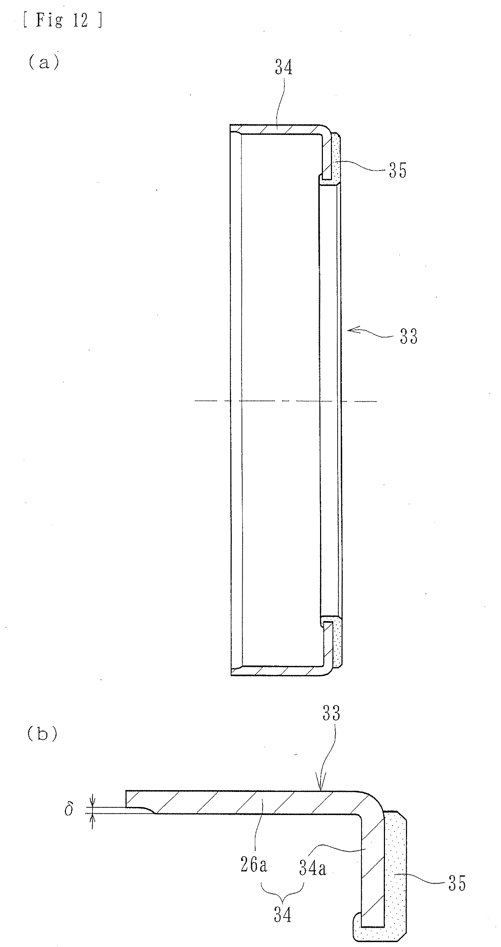

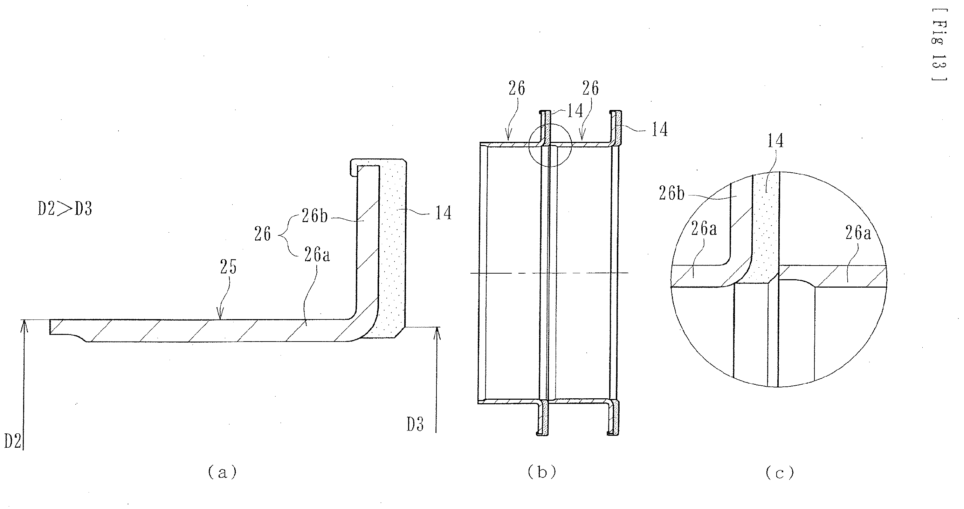

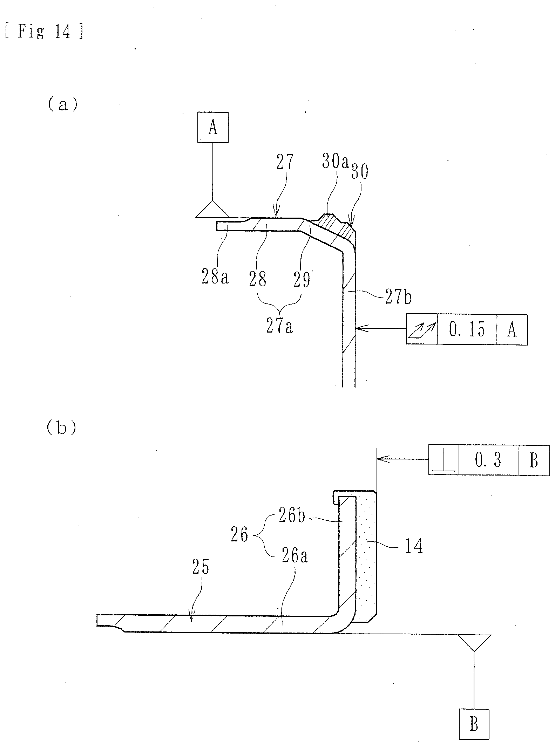

Fig.7 is a longitudinal-sectional view of a second embodiment of an illustrative wheel bearing apparatus of the present disclosure; Fig.8 is a partially enlarged view showing a condition in which the protecting cover and pulser ring of Fig. 7 are mounted; Fig.9(a) is an explanatory view showing the preset of the protecting cover of Fig. 8; Fig.9(b) is an explanatory view showing the preset of the pulser ring of Fig. 8; Fig.10(a) is a partially enlarged view showing a modification of the protecting cover of Fig. 8; Fig.10(b) is a partially enlarged view showing a preset of the protecting cover of Fig. 10(a); Fig.11(a) is a partially enlarged sectional view showing the protecting cover of Fig. 8; Fig.11(b) is an explanatory view showing nest of the protecting cover; Fig.11(c) is a partially enlarged view of Fig.11(b); Fig.12(a) is a longitudinal sectional view of a modification of the pulser ring of Fig. 8; Fig.12(b) is a partially enlarged sectional view of Fig. 12(a); Fig.13(a) is a partially enlarged sectional view showing the pulser ring of Fig. 8; Fig.13(b) is an explanatory view showing nest of the pulser ring of Fig.13(a); Fig.13(c) is a partially enlarged view of Fig.13(b); Fig.14(a) is an explanatory view showing the accuracy of the protecting cover of Fig. 8; and Fig.14(b) is an explanatory view showing the accuracy of the pulser ring of Fig. 8. Same reference numerals are used for designating the same structural elements of the previous embodiment and detailed description of them will be omitted.

The wheel bearing apparatus of the present disclosure shown in Fig. 7 is a so-called "third generation" type for a driven wheel and comprises an inner member 22, an outer member 23, and double row rolling elements (balls) 3, 3 contained between the inner and outer members 22 and 23. The inner member 22 includes the hub wheel 24 and a separate inner ring 5 press-fitted onto the hub wheel 24.

The hub wheel 24 is integrally formed, on its outer-side end, with a wheel mount flange 6, and on its outer circumference, with one (i.e. outer-side) inner raceway surface 24a and the cylindrical portion 4b axially extending from the inner raceway surface 24a.

The hub wheel 24 is made of medium-high carbon steel such as S53C including carbon of 0.40 ∼ 0.80% by weight and is hardened by high frequency induction hardening as having a surface hardness of 58 ∼ 64 HRC over the inner raceway surface 24a and a region from an inner-side base 6b of the wheel mounting flange 6 to the cylindrical portion 4b.

On the other hand, outer member 23 is formed, on its outer circumference, with body mount flange 2b and also formed, on its inner circumference, with double row outer raceway surfaces 23a, 23a opposed to the double row inner raceway surfaces 24a, 5a of the inner member 22. Similarly to the hub wheel 24, the outer member 23 is formed of medium-high carbon steel such as S53C including carbon of 0.40 ∼ 0.80% by weight and at least the double row outer raceway surfaces 23a, 23a is hardened by high frequency induction hardening as having a surface hardness of 58 ∼ 64 HRC. The double row rolling elements 3, 3 are freely rollably contained between the double row outer raceway surfaces 23a, 23a of the outer member 23 and the double row inner raceway surfaces 24a, 5a and rollably held therein by cages 8, 8.

Annular openings are formed between the outer member 23 and the inner member 22. A seal 9 is mounted in the outer-side opening and a protecting cover 27 is mounted in the inner-side opening in order to prevent leakage of lubricating grease sealed within the bearing and entering of rain water or dusts from the outside into the bearing.

In this embodiment, the pitch circle diameter PCDo of the outer-side row of rolling elements 3 is set larger than the pitch circle diameter PCDi of the inner-side rolling elements 3 (PCDo>PCDi). Due to the difference of the pitch circle diameters PCDo, PCDi, the diameter of each rolling element 3 of the outer-side row is set smaller than the diameter of each rolling element 3 of the inner-side row, and the number of the outer-side row of rolling element 3 is set larger than the number of the inner-side row of rolling element 3. This makes it possible to effectively use the bearing space and to increase the bearing rigidity of the outer-side as compared with that of the inner-side and thus to extend the life of bearing with effectively using the bearing space.

Although it is shown herein the wheel bearing apparatus formed by a double row angular contact ball bearing using balls as rolling elements 3, the present disclosure is not limited to such a bearing and may be a double row tapered roller bearing using tapered rollers as rolling elements 3. In addition, although it is shown herein the bearing of third generation type, the present disclosure can be applied to a so-called second generation type.

A pulser ring 25 is press-fitted onto the outer circumference of the inner ring 5. The pulser ring 25 comprises an annular supporting member 26 formed e.g. of ferritic stainless steel sheet (JIS SUS 430 etc.) or preserved cold rolled steel sheet by press working as having a L-shaped longitudinal section and the magnetic encoder 14 integrally adhered to the annular supporting member 26.

As shown in an enlarged view of Fig. 8, the annular supporting member 26 comprises a cylindrical fitting portion 26a press-fitted onto the outer circumference 5c and a standing portion 26b extending radially outward from the cylindrical fitting portion 26a. The magnetic encoder 14 is integrally adhered to the inner-side surface of the standing portion 26b by vulcanizing adhesion.

Similarly to the first embodiment, a protecting cover 27 is press-fitted into the inner circumference of the inner-side end of the outer member 23 to close the inner-side opening of the outer member 23. The protecting cover 27 is formed of non-magnetic steel sheet having corrosion resistance e.g. austenitic stainless steel sheet.

The protecting cover 27 comprises a cylindrical fitting portion 27a press-fitted into the end inner circumference of the outer member 23, a disc-shaped shielding portion 27b extending radially inward from the fitting portion 27a and adapted to be opposed to the magnetic encoder 14 via a slight axial gap, and a bottom portion 27d continuous from the shielding portion 27c via a bent portion 27c to close the inner-side end of the inner member 22.

The detecting portion of the rotation speed detecting sensor 16 is adapted to be arranged closely to or contacted with the shielding portion 27c of the protecting cover 27 the detecting portion and the magnetic encoder 14 are oppositely arranged at a predetermined air gap (axial gap) via the protecting cover 27.

In this embodiment, the fitting portion 27a comprising a cylindrical portion28 to be press-fitted into the fitting surface 2d of the inner circumference at the inner-side end of the outer member 23, and the radially reducing inclined portion 29 axially extending from the cylindrical portion 28. An elastic member (sealing member) 30 of synthetic rubber such as NBR etc. is adhered on the radially reducing portion 29 via vulcanizing adhesion. The elastic member 30 is formed so that it does not project from the inner-side surface of the shielding portion of the protecting cover 27 and has an annular projection (projected portion) 30a projecting radially outward from the outer circumference of the cylindrical portion 28. This annular projection 30 is press-contacted with the inner circumference of the inner-side end of the outer member 23 when the protecting cover 27 is press-fitted into the outer member 23 and thus the sealability of the fitting portion 27a can be improved.

A step δ is formed on the end 28a of the cylindrical portion 28 of the fitting portion 27a and the outer diameter d1 of the step δ is smaller than the inner diameter d0 of the fitting surface 2d of the outer member 23 (d1<d0). This enables the protecting cover 27 to be preset under a coaxially aligned condition of the protecting cover 27 when the protecting cover 27 is press-fitted into the outer member 23 as shown in Fig. 9(a). Thus, it is possible to provide a wheel bearing apparatus which can improve the sealability of the fitting portion with preventing generation of damages or scratches during press-fitting operation and can improve the workability in press-fitting operation. Since the step δ at the end 28a of the cylindrical portion 28 forms a guiding gap, it is preferable that its height is within a range of 0.15 ∼ 0.30 mm (0.30 ∼ 0.60 mm in diameter). If it is less than 0.15 mm, fitting workability could not be expected, on the other hand if it exceeds 0.30 mm, the end 28a of the cylindrical portion 28 would be plastically deformed during the press-fitting operation.

A width L1 of the step δ of the end 28a of the fitting portion 27a of the cylindrical portion 28 is larger than a width L2 of a chamfered portion 2e of the inner circumference at the end of the outer member 23 (L1>L2). In addition, the press-fitting reference surface relative to the cylindrical portion 28 forming the fitting surface, i.e. the surface deflection of the shielding portion 27b is limited to 0.15 mm or less as shown in Fig. 14(a). This makes it possible to preset the protecting cover 27 under an attitude controlled condition of the protecting cover 27 when the protecting cover is press-fitted into the outer member 23 and thus to further improve the workability in press-fitting operation of the protecting cover 27.

These protecting covers 27 are usually stored or stocked for awaiting a next assembling step in a factory under a nested condition as shown in Fig. 11(b) for saving a space. In order to prevent the protecting covers 27 from being snugly fitted to each other, it is set as shown in Fig. 11(a) that an inner diameter d2 of the end 28a of the cylindrical portion 28 of the fitting portion 27a is smaller than an outer diameter d3 of the elastic member 30 (d2<d3). This makes it possible to surely abut the end 28a of the cylindrical portion 28 against the elastic member 30 as shown in Fig. 11(c) and thus to improve the workability in the assembling step of the protecting cover 27.

There are other configurations for making easy the preset during press-fitting of the protecting cover 27 than the way for forming the step δ on the end of the fitting portion 27a. For example, a way shown in Fig. 10(a) may be adopted. That is, in this protecting cover 31, a fitting portion 31a comprises a cylindrical portion 28 to be fitted into the fitting surface 2d formed on the inner-side end of the outer member 23, and a tapered radially reducing portion 29 inclined from the cylindrical portion 28. An end 32 of the cylindrical portion 28 is inclined from the cylindrical portion 28, and has a smaller diameter than the cylindrical portion 28. Similarly to the previous embodiment of Figs. 8 and 9, it is possible as shown in Fig. 10(b) to preset the protecting cover 27 under a coaxially aligned condition of the protecting cover 27 and thus to improve the workability in press-fitting operation of the protecting cover 27 without reducing the sheet thickness of the fitting portion 31a and thus the strength of the fitting portion.

Similarly to the protecting cover 27, the pulser ring 25 is also formed with a step δ as shown in Fig. 8. The step δ is formed on the end of the fitting portion 26a of the annular supporting member 26 of the pulser ring 25 and the inner diameter D1 of the step δ is larger than the outer diameter D0 of the inner ring 5 (D1>D0). This enables the pulser ring 25 to be preset under a coaxially aligned condition of the pulser ring 25 when the pulser ring 25 is press-fitted onto the inner ring 5 as shown in Fig. 9(b). Thus, it is possible to improve the sealability of the fitting portion with preventing generation of damages or scratches during press-fitting operation and also to improve the workability in press-fitting operation.

A width L3 of the step δ of the end of the fitting portion 26a of the annular supporting member 26 is larger than a width L4 of a chamfered portion 5d of the outer circumference at the end of the inner ring 5 (L3>L4). In addition, the press-fitting reference surface relative to the fitting portion 26a, i.e. the perpendicularity of the magnetic encoder 14 is limited to 0.30 mm or less as shown in Fig. 14(b). This makes it possible to preset the pulser ring 25 under an attitude controlled condition of the pulser ring 25 when the pulser ring 25 is press-fitted onto the inner ring 5 and thus to further improve the workability in press-fitting operation of the pulser ring 25.

Also similarly to the protecting cover 27, these pulser rings 25 are usually stored or stocked for awaiting a next assembling step in a factory under a nested condition as shown in Fig. 13(b) for saving a space. In order to prevent the pulser ring 25 from being snugly fitted each other, it is set as shown in Fig. 13(a) that an inner diameter D2 of the fitting portion 26a of the annular supporting member 26 is larger than an inner diameter D3 of the magnetic encoder 14 (D2>D3). This makes it possible to surely abut the fitting portion 26a of the annular supporting member 26 against the magnetic encoder 14 as shown in Fig. 13(c) and thus to improve the workability in the assembling step of the pulser ring 25.

Fig. 12(a) shows a modification of the pulser ring 25 of Fig. 8. This pulser ring 33 is press-formed of ferromagnetic steel sheet such as ferritic stainless steel sheet or preserved cold rolled steel sheet and comprises an annular supporting member 34 having a L-shaped longitudinal section and a magnetic encoder 35 integrally adhered to the annular supporting member 34.

As shown in an enlarged view of Fig. 12(b), the annular supporting member 34 comprises the cylindrical fitting portion 26a to be press-fitted onto the inner ring 5 and a standing portion 34a radially inwardly extending from the fitting portion 26a. A magnetic encoder 35 is integrally adhered to the inner-side surface of the standing portion 34a. The step δ is formed on the end of the fitting portion 26a. According to this modification, since the standing portion 34a extends radially inward from the fitting portion 26a, it is possible to reduce the size of the pulser ring 25 and to prevent the pulser rings 25 from being snugly fitted to each other.

### Third Embodiment

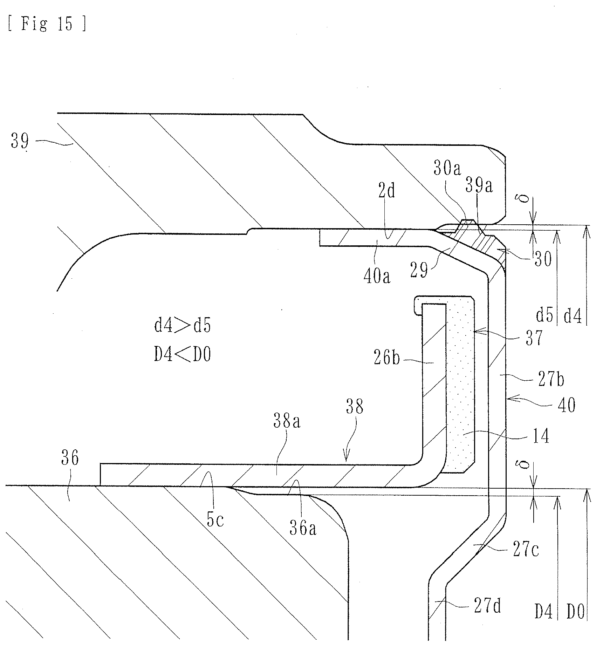

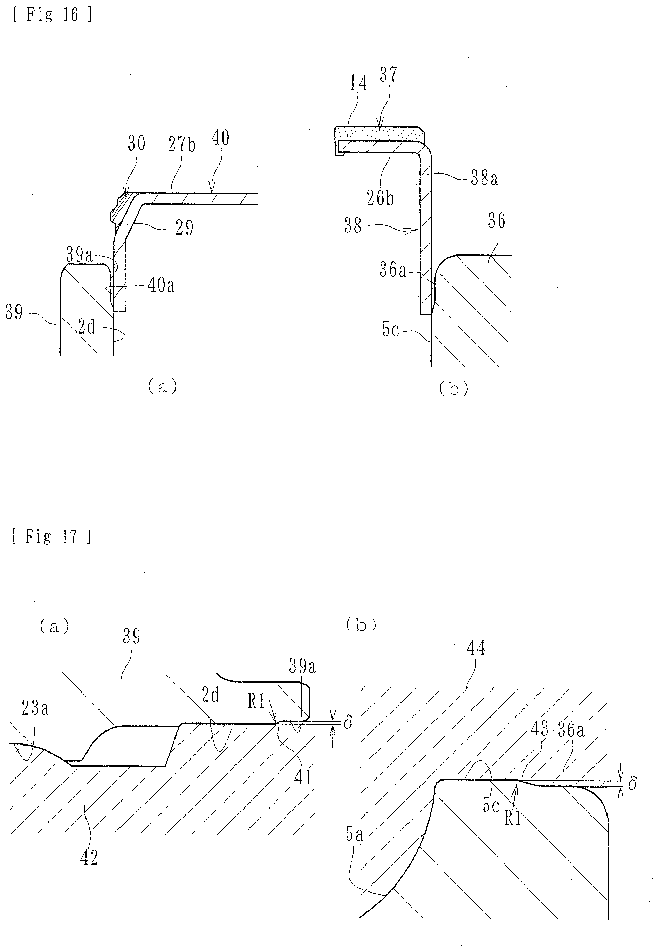

Fig.15 is a longitudinal-sectional view of a third embodiment of an illustrative wheel bearing apparatus of the present disclosure; Fig.16(a) is an explanatory view showing a preset of the protecting cover of Fig. 15; Fig.16(b) is an explanatory view showing a preset of the pulser ring of Fig. 15; Fig.17(a) is an explanatory view showing a method for processing the outer member of Fig. 15; and Fig.17(b) is an explanatory view showing a method for processing the inner ring of Fig. 15. Same reference numerals are used for designating the same structural elements of the previous embodiments and detailed description of them will be omitted.

Similarly to the previous embodiments, a pulser ring 37 is press-fitted onto an inner ring 36 and press-formed of ferromagnetic steel sheet such as ferritic stainless steel sheet or preserved cold rolled steel sheet and comprises an annular supporting member 38 having an L-shaped longitudinal section and the magnetic encoder 14 integrally adhered to the annular supporting member 38.

The annular supporting member 38 comprises a cylindrical fitting portion 38a press-fitted onto the outer circumference, and a standing portion 26b extending radially outward from the fitting portion 38a. The magnetic encoder 14 is integrally adhered to the inner-side surface of the standing portion 26b via vulcanizing adhesion.

A protecting cover 40 is press-fitted into the inner circumference of the inner-side end of an outer member 39 to close the inner-side opening of the outer member 39. The protecting cover 40 comprises a cylindrical fitting portion 40a press-fitted into the inner circumference of the inner-side end of the outer member 39, the disc-shaped shielding portion 27b extending radially inward from the fitting portion 40a via the radially reducing portion 29 and opposed to the magnetic encoder 14 via a slight axial gap, and the bottom portion 27d extending radially inward from the shielding portion 27b via the bent portion 27c and covering the inner-side end of the inner member 22.

The outer member 39 is formed with a guiding portion 39a having a step δ on the inner circumference of the outer member 39 at the inner-side end thereof. The inner diameter d4 of the guiding portion 39a is larger than the outer diameter d5 of the fitting portion 40a of the protecting cover 40 (d4>d5). This enables the protecting cover 40 to be preset under a coaxially aligned condition of the protecting cover 40 when the protecting cover 40 is press-fitted into the outer member 39 as shown in Fig. 16(a). Thus, it is possible to improve the sealability of the fitting portion with preventing generation of damages or scratches during press-fitting operation and also to improve the workability in press-fitting operation.

As shown in Fig. 17(a), a transition portion 41 between the fitting surface 2d of the outer member 39 and the guiding portion 39a of the outer member 39 is formed as having a circular-arc longitudinal section having a predetermined radius of curvature R1, and the outer raceway surfaces 23a, fitting surface 2d and transitional portion 41 are simultaneously ground by a formed grinding wheel 42. This makes it possible to improve the dimensional accuracy and coaxiality of the protecting cover and the outer member and thus to further improve the workability of press-fitting operation of the protecting cover 40.

On the other hand, a guiding portion 36a having a step δ is formed on the outer circumference of the end of the inner ring 36 as shown in Fig. 15 and an outer diameter D4 of the guiding portion 36a is smaller than an outer diameter D0 of the inner ring 36 (D4<D0). This makes it possible to preset the pulser ring 37 under a coaxially aligned condition when the pulser ring 37 is press-fitted onto the inner ring 36. Thus, it is possible to improve the sealability of the fitting portion with preventing generation of damages or scratches during press-fitting operation of the pulser ring 37 and to improve the workability in press-fitting operation.

In addition, as shown in Fig. 17(b), a transition portion 43 between the outer circumference 5c of the inner ring 36 and the guiding portion 36a of the inner ring 36 is formed as having a circular-arc longitudinal section having a radius of curvature R1, and the inner raceway surface 5a of the inner ring 36, outer circumference 5c and transitional portion 43 are simultaneously ground by a formed grinding wheel 44. This makes it possible to improve the dimensional accuracy and coaxiality of the pulser ring 37 and the inner ring 36 and thus to further improve the workability of press-fitting operation of the pulser ring 37.

The present invention has been described with reference to preferred and illustrative embodiments of the present disclosure. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industry

The present invention can be applied to wheel bearing apparatus for a driven wheel of inner ring rotation type of first ∼ third generation structure.

### Description of Reference numerals

- 1, 22: inner member
- 2, 23, 39: outer member
- 2a, 23a: outer raceway surface
- 2b: body mounting flange
- 2c: inner-side end face of outer member
- 2d: fitting surface of outer member
- 2e: chamfered surface of outer member
- 3: rolling element
- 4, 24: hub wheel
- 4a, 5a, 24a: inner raceway surface
- 4b: cylindrical portion
- 5, 36: inner ring
- 5b: larger end face of inner ring
- 5c: outer circumference of inner ring
- 5d: chamfered surface of inner ring
- 6: wheel mounting flange
- 6a: hub bolt
- 6b: inner-side base of wheel mounting flange
- 7: caulked portion
- 8: cage
- 9: outer-side seal
- 10, 18, 20, 21, 27, 31, 40: protecting cover
- 10a, 18a, 26a, 27a, 31a, 38a, 40a: fitting portion
- 10b, 18b, 29: radially reducing portion
- 10c, 18c, 20a, 27b: shielding portion
- 10d, 20b: stepped portion
- 10e, 27d: bottom portion
- 11: core metal
- 12, 15, 19: sealing member
- 12a: side lip
- 12b: dust lip
- 12c: grease lip
- 13, 26, 34, 38: annular supporting member
- 13a, 28: cylindrical portion
- 13b, 26b, 34a: standing portion
- 14, 35: magnetic encoder
- 15a, 19a: projected portion
- 15b, 19b: annular portion
- 16: rotation speed detecting sensor
- 16a: detecting portion
- 17: press-fitting tool
- 21a: thinned portion
- 25, 33, 37: pulser ring
- 27c: bent portion
- 28a, 32: end portion of cylindrical portion
- 30: elastic member
- 30a: annular projection
- 36a, 39a: guiding portion
- 41, 43: transitional portion
- 42, 44: formed grinding wheel
- 50: outer member
- 50a: outer raceway surface
- 50b: body mounting flange
- 51: inner member
- 52: ball
- 53: hub wheel
- 53a, 54a: inner raceway surface
- 53b: cylindrical portion
- 53c: caulked portion
- 54: inner ring
- 55: wheel mounting flange
- 55a: base portion
- 56: sealing ring
- 57: encoder
- 58: annular supporting member
- 59: encoder body
- 60: cover
- 61: closing plate portion
- 62: fitting portion
- 63: sensor
- 64: detecting portion
- 65: knuckle
- 66: screw
- 70: outer member
- 70a: outer raceway surface
- 71: inner ring
- 71a: inner raceway surface
- 72: ball
- 73: wheel mounting flange
- 74: axle shaft
- 75: securing nut
- 76: shield
- 77: seal
- 78: brake pilot portion
- 79: wheel pilot portion
- 80: cap
- 80a: cylindrical portion
- 80b: overlapped portion
- 80c: bottom portion
- 81: claw
- 82: annular groove
- 83: guiding portion
- 84: scratch
- A: width of guiding portion
- d0: inner diameter of fitting surface of outer member
- d1: outer diameter of cylindrical portion of cap
- d2: inner diameter of end portion of cylindrical portion of cap
- d3: outer diameter of elastic member
- d4: inner diameter of guiding portion of outer member
- d5: outer diameter of fitting portion of cap
- D0: outer diameter of inner ring
- D1: inner diameter of end portion of pulser ring
- D2: outer diameter of fitting portion of pulser ring
- D3: inner diameter of magnetic encoder
- D4: outer diameter of guiding portion of inner ring
- L0: step between outer member and inner ring
- L1: width of step of end portion of cylindrical portion of cap
- L2: width of chamfered portion of inner circumference of end portion of outer member
- L3: width of step of end portion of cylindrical portion of pulser ring
- L4: width of chamfered portion of outer circumference of end portion of inner ring
- PCDi: pitch circle diameter of rolling elements of inner side
- PCDo: pitch circle diameter of rolling elements of outer side
- R1: radius of curvature of transitional portion
- t0: sheet thickness of fitting portion
- t1: sheet thickness of shielding portion
- t2: sheet thickness of thinned portion
- δ: step
- θ: inclined angle of shielding portion

## Claims

1. A wheel bearing apparatus comprising:
an outer member (2) integrally formed on its inner circumference with double row outer raceway surfaces (2a, 2a);
an inner member (1) including a hub wheel (4) and at least one inner ring (5), the hub wheel (4) being integrally formed on its one end with a wheel mounting flange (6) and having a cylindrical portion (4b) axially extending from the wheel mounting flange (6), the inner ring (5) being press fitted onto the cylindrical portion (4b) of the hub wheel (4), the hub wheel (4) and the inner ring (5) being formed on their outer circumferences respectively with double row inner raceway surfaces (4a, 5a) opposing to the double row outer raceway surfaces (2a, 2a);
double row rolling elements (3, 3) freely rollably contained between the inner raceway surfaces (4a, 5a) and outer raceway surfaces (2a, 2a) of the inner member (1) and outer member (2);
a pulser ring (37) fitted onto the outer circumference of the inner ring (5);
a seal (9) mounted on the outer-side end of the outer member (2) and a protecting cover (10) mounted on the inner-side end of the outer member (2) in order to close and seal annular openings formed between the outer member (2) and the inner member (1) at their both ends; and
the protecting cover (10) being formed of non-magnetic steel sheet as having a cup-shaped configuration by press working and comprises a cylindrical fitting portion (10a) press-fitted into the inner circumference (2d) of the inner-side end of the outer member (2), a disc-shaped shielding portion (10c) extending radially inward from the fitting portion (10a) via a radially reducing portion (10b) and the inner-side surface of the shielding portion (10c) being adapted to be arranged closely to or in contact with a rotation speed detecting sensor (16), and a bottom portion (10e) continuous to the shielding portion (10c) via a stepped portion (10d) to close the inner-side end of the inner member (1); **characterized in:**
**that** a full deflection of the side surface of the shielding portion (10c) caused by a load same as that applied to the protecting cover (10) when it is press-fitted into the outer member (2) is limited to a predetermined value or less,
wherein the allowable limitation of the full deflection of the shielding portion (10c) of the protecting cover (10) is 0.15 mm or less, and wherein the shielding portion (10c) of the protecting cover (10) is formed so that it is inclined toward the outer-side by a predetermined inclined angle (θ) such that the radially inward end of the shielding portion (10c) is closer to the outer-side.

2. A wheel bearing apparatus of claim 1 wherein the radially reducing portion (10b) of the protecting cover (10) has a stepped configuration in its longitudinal section.

3. A wheel bearing apparatus of claim 1 or 2 wherein the radially reducing portion (18b) of the protecting cover (18) is tapered so that its radius is gradually reduced toward the inner-side direction.

4. A wheel bearing apparatus of any one of claims 1 - 3 wherein a sealing member (15) is integrally adhered to the outer circumference of the radially reducing portion (10b) of the protecting cover (10), wherein the sealing member (15) comprises an annular portion (15b) having an outer diameter slightly smaller than an outer diameter of the fitting portion (10a) of the protecting cover (10) and a projected portion (15a) having an outer diameter larger than that of the fitting portion (10a), and wherein the projected portion (15a) is press-fitted into the inner circumference (2d) of the end of the outer member (2) via a predetermined interference.

5. A wheel bearing apparatus of claim 4 wherein the dimension of the sealing member (15) is set so that it does not project beyond the inner-side surface of the shielding portion (10c) of the protecting cover (10).

6. A wheel bearing apparatus of claim 4 or 5 wherein the fitting volume of the projected portion (15a) of the sealing member (15) is set so that it is smaller than a volume of an annular space formed between the annular portion (15b) of the sealing member (15) and the inner circumference (2d) of the outer member (2) under a condition in which a press-fitting tool is abutted against the sealing member (15).

7. A wheel bearing apparatus of any one of claims 4 - 6 wherein the inner diameter (d2) of the end of the fitting portion (10a) of the protecting cover (10) is set so that it is smaller than the outer diameter (d3) of the inner-side end surface of the sealing member (15).

8. A wheel bearing apparatus of claim 1 wherein a sheet thickness (t2) of the shielding portion (20a) of the protecting cover (21) is smaller than a sheet thickness (t1) of the other portions.

9. A wheel bearing apparatus of any one of claims 1 - 8 wherein either one of fitting surfaces of the protecting cover (27) and the outer member (23) is formed with a step (δ) in a radial direction.

10. A wheel bearing apparatus of claim 9 wherein the height of the step (δ) is within a range of 0.15 ∼ 0.30 mm.

11. A wheel bearing apparatus of claim 9 or 10 wherein the step (δ) is formed on the end (28a) of the fitting portion (27a) of the protecting cover (27) by a press work, and wherein the outer diameter (d1) of the step (δ) is smaller than the inner diameter (d0) of the fitting surface (24) of the outer member (23).

12. A wheel bearing apparatus of claim 9 or 10 wherein the end (28a) of the fitting portion (27a) is formed as a small diameter portion having a diameter smaller than the outer diameter of the fitting portion (27a) by the height of the step (δ).

13. A wheel bearing apparatus of any one of claims 9 - 12 wherein a width (L1) of the step (δ) of the protecting cover (27) is larger than a width (L2) of a chamfered portion (2e) end of the outer member (23).

14. A wheel bearing apparatus of claim 9 or 10 wherein a guiding portion (39a) is formed on the inner circumference of the end of the outer member (39), and wherein an inner diameter (d4) of the guiding portion (39a) is larger than an outer diameter (d5) of the fitting portion (40a) of the protecting cover (40).

15. A wheel bearing apparatus of claim 14 wherein a transition portion (41) between the fitting surface (2d) and the guiding portion (39a) of the outer member (39) is formed as having a circular-arc longitudinal section having a radius of curvature (R1), and wherein the outer raceway surfaces (23a), fitting surface (2d) and transitional portion (41) are simultaneously ground by a formed grinding wheel (42).

## Patentansprüche

1. Radlagervorrichtung, umfassend:
ein äußeres Element (2), das an seinem Innenumfang in einem Stück mit doppelreihigen Laufring-Außenoberflächen (2a, 2a) ausgebildet ist;
ein inneres Element (1), das eine Radnabe (4) und mindestens einen Innenring (5) beinhaltet, wobei die Radnabe (4) an ihrem einen Ende in einem Stück mit einem Radmontageflansch (6) ausgebildet ist und einen zylindrischen Abschnitt (4b) aufweist, der sich axial von dem Radmontageflansch (6) aus erstreckt, wobei der Innenring (5) auf den zylindrischen Abschnitt (4b) der Radnabe (4) aufgepresst ist, wobei die Radnabe (4) und der Innenring (5) an ihren Außenumfängen jeweils mit doppelreihigen Laufring-Innenoberflächen (4a, 5a) ausgebildet sind, die den doppelreihigen Laufring-Außenoberflächen (2a, 2a) gegenüberliegen;
doppelreihige Rollenelemente (3, 3), die frei rollbar zwischen den Laufring-Innenoberflächen (4a, 5a) und den Laufring-Außenoberflächen (2a, 2a) des inneren Elements (1) und des äußeren Elements (2) enthalten sind;
einen Impulsring (37), der auf den Außenumfang des Innenrings (5) aufgesteckt ist;
eine Dichtung (9), die auf das Außenseitenende des äußeren Elements (2) montiert ist, und eine Schutzabdeckung (10), die auf das Innenseitenende des äußeren Elements (2) montiert ist, um ringförmige Öffnungen zu verschließen und abzudichten, die zwischen dem äußeren Element (2) und dem inneren Element (1) an ihren beiden Enden ausgebildet sind; und
wobei die Schutzabdeckung (10) aus nichtmagnetischem Stahlblech durch Pressumformen derart ausgebildet ist, dass sie eine becherförmige Gestaltung aufweist, und einen zylindrischen Steckabschnitt (10a) umfasst, der in den Innenumfang (2d) des Innenseitenendes des äußeren Elements (2) eingepresst ist, wobei sich ein scheibenförmiger Abschirmabschnitt (10c) von dem Steckabschnitt (10a) aus mittels eines radial reduzierenden Abschnitts (10b) radial einwärts erstreckt und die Innenseitenoberfläche des Abschirmabschnitts (10c) dazu eingerichtet ist, in der Nähe von oder in Kontakt mit einem Drehzahlmesssensor (16) angeordnet zu sein, und ein Bodenabschnitt (10e) mittels eines gestuften Abschnitts (10d) durchgängig mit dem Abschirmabschnitt (10c) ist, um das Innenseitenende des inneren Elements (1) zu verschließen; **dadurch gekennzeichnet, dass**:
eine volle Durchbiegung der Seitenoberfläche des Abschirmabschnitts (10c), die durch eine Last verursacht wird, die die gleiche ist wie die, die auf die Schutzabdeckung (10) angewandt wird, wenn diese in das äußere Element (2) eingepresst wird, auf einen festgelegten Wert oder weniger begrenzt ist, wobei die zulässige Begrenzung der vollen Durchbiegung des Abschirmabschnitts (10c) der Schutzabdeckung (10) 0,15 mm oder weniger beträgt, und wobei der Abschirmabschnitt (10c) der Schutzabdeckung (10) so ausgebildet ist, dass er zur Außenseite hin um einen festgelegten Neigungswinkel (θ) geneigt ist, so dass das radial innenliegende Ende des Abschirmabschnitts (10c) näher zur Außenseite ist.

2. Radlagervorrichtung nach Anspruch 1, wobei der radial reduzierende Abschnitt (10b) der Schutzabdeckung (10) in seinem Längsschnitt eine gestufte Gestaltung aufweist.

3. Radlagervorrichtung nach Anspruch 1 oder 2, wobei der radial reduzierende Abschnitt (18b) der Schutzabdeckung (18) abgeschrägt ist, so dass sein Radius zur Innenseitenrichtung hin allmählich reduziert ist.

4. Radlagervorrichtung nach einem der Ansprüche 1 bis 3, wobei ein Dichtungselement (15) in einem Stück an den Außenumfang des radial reduzierenden Abschnitts (10b) der Schutzabdeckung (10) angeheftet ist, wobei das Dichtungselement (15) einen ringförmigen Abschnitt (15a) mit einem Außendurchmesser, der etwas kleiner als ein Außendurchmesser des Steckabschnitts (10a) der Schutzabdeckung (10) ist, und einen vorstehenden Abschnitt (15a) mit einem Außendurchmesser, der größer als der des Steckabschnitts (10a) ist, umfasst und wobei der vorstehende Abschnitt (15a) mittels eines festgelegten Eingriffs in den Innenumfang (2d) des Endes des äußeren Elements (2) eingepresst ist.

5. Radlagervorrichtung nach Anspruch 4, wobei die Abmessung des Dichtungselements (15) derart eingestellt ist, dass es nicht über die Innenseitenoberfläche des Abschirmabschnitts (10c) der Schutzabdeckung (10) hinaus hervorsteht.

6. Radlagervorrichtung nach Anspruch 4 oder 5, wobei das Steckvolumen des vorstehenden Abschnitts (15a) des Dichtungselements (15) derart eingestellt ist, dass es kleiner als ein Volumen eines ringförmigen Raums ist, der in einem Zustand, in dem ein Einpresswerkzeug an dem Dichtungselement (15) anliegt, zwischen dem ringförmigen Abschnitt (15b) des Dichtungselements (15) und dem Innenumfang (2d) des äußeren Elements (2) ausgebildet ist.

7. Radlagervorrichtung nach einem der Ansprüche 4 bis 6, wobei der Innendurchmesser (d2) des Endes des Steckabschnitts (10a) der Schutzabdeckung (10) derart eingestellt ist, dass er kleiner als der Außendurchmesser (d3) der Oberfläche des Innenseitenendes des Dichtungselements (15) ist.

8. Radlagervorrichtung nach Anspruch 1, wobei eine Blechdicke (t2) des Abschirmabschnitts (20a) der Schutzabdeckung (21) kleiner als eine Blechdicke (t1) der anderen Abschnitte ist.

9. Radlagervorrichtung nach einem der Ansprüche 1 bis 8, wobei eines von den Steckoberflächen der Schutzabdeckung (27) und dem äußeren Element (23) mit einer Stufe (δ) in einer radialen Richtung ausgebildet ist.

10. Radlagervorrichtung nach Anspruch 9, wobei die Höhe der Stufe (δ) in einem Bereich von 0,15 ∼ 0,30 mm liegt.

11. Radlagervorrichtung nach Anspruch 9 oder 10, wobei die Stufe (δ) an dem Ende (28a) des Steckabschnitts (27a) der Schutzabdeckung (27) durch ein Pressumformen ausgebildet ist, und wobei der Außendurchmesser (d1) der Stufe (δ) kleiner als der Innendurchmesser (d0) der Steckoberfläche (24) des äußeren Elements (23) ist.

12. Radlagervorrichtung nach Anspruch 9 oder 10, wobei das Ende (28a) des Steckabschnitts (27a) als ein Abschnitt mit kleinem Durchmesser ausgebildet ist, der einen Durchmesser aufweist, der um die Höhe der Stufe (δ) kleiner als der Außendurchmesser des Steckabschnitts (27a) ist.

13. Radlagervorrichtung nach einem der Ansprüche 9 bis 12, wobei eine Breite (L1) der Stufe (δ) der Schutzabdeckung (27) größer als eine Breite (L2) eines Endes des äußeren Elements (23) mit abgeschrägtem Abschnitt (2e) ist.

14. Radlagervorrichtung nach Anspruch 9 oder 10, wobei ein Führungsabschnitt (39a) an dem Innenumfang des Endes des äußeren Elements (39) ausgebildet ist, und wobei ein Innenumfang (d4) des Führungsabschnitts (39a) größer als ein Außendurchmesser (d5) des Steckabschnitts (40a) der Schutzabdeckung (40) ist.

15. Radlagervorrichtung nach Anspruch 14, wobei ein Übergangsabschnitt (41) zwischen der Steckoberfläche (2d) und dem Führungsabschnitt (39a) des äußeren Elements (39) derart geformt ist, dass er einen rundbogenförmigen Längsschnitt mit einem Krümmungsradius (R1) aufweist, und wobei die Laufring-Außenoberflächen (23a), die Steckoberfläche (2d) und der Übergangsabschnitt (41) gleichzeitig durch eine geformte Schleifscheibe (42) geschliffen werden.

## Revendications

1. Appareil de roulement pour roue comprenant :
un élément externe (2) formé de manière intégrée sur sa circonférence interne avec des doubles surfaces à circuit externe de rangée (2a, 2a) ;
un élément interne (1) comprenant une roue de moyeu (4) et au moins un anneau interne (5), la roue de moyeu (4) étant formée de manière intégrée sur sa une extrémité avec une bride de fixation de roue (6) et ayant une section cylindrique (4b) s'étendant axialement à partir de la bride de fixation de roue (6), l'anneau interne (5) étant ajusté par pression sur la section cylindrique (4b) de la roue de moyeu (4), la roue de moyeu (4) et l'anneau interne (5) étant formés sur leurs circonférences externes respectivement avec les doubles surfaces de circuit interne (4a, 5a) s'opposant aux doubles surfaces à circuit externe de rangée (2a, 2a) ;
des éléments de roulement à double rangée (3, 3) à rotation libre contenus entre les surfaces du circuit interne (4a, 5a) et les surfaces du circuit externe (2a, 2a) de l'élément interne (1) et de l'élément externe (2) ;
un anneau impulseur (37) ajusté sur la circonférence externe de l'anneau interne (5) ;
un joint d'étanchéité (9) monté sur l'extrémité de côté externe de l'élément externe (2) et un couvercle de protection (10) monté sur l'extrémité de côté interne de l'élément externe (2) pour fermer et sceller les ouvertures annulaires formées entre l'élément externe (2) et l'élément interne (1) à leurs deux extrémités ; et
le couvercle de protection (10) étant formé d'une feuille d'acier non magnétique comme ayant une configuration en forme de coupe par travail par pression et comprend une section d'ajustement cylindrique (10a) ajustée par pression dans la circonférence interne (2d) de l'extrémité de côté interne de l'élément externe (2), une section de bouclier en forme de disque (10c) s'étendant radialement vers l'intérieur de la section d'ajustement (10a) via une section de réduction radiale (10b) et la surface de côté interne de la section de bouclier (10c) étant adaptée pour être disposée étroitement avec ou en contact avec un capteur de détection de vitesse de rotation (16), et une section de partie inférieure (10e) continue à la section de bouclier (10c) via une section échelonnée (10d) pour fermer l'extrémité de côté interne de l'élément interne (1) ; **caractérisé en ce :**
**qu'**une déflexion complète de la surface latérale de la section de bouclier (10c) provoquée par une charge identique à celle appliquée au couvercle de protection (10) quand il est ajusté par pression dans l'élément externe (2) est limitée à une valeur prédéterminée ou moins, la limitation permise de la déflexion complète de la section de bouclier (10c) du couvercle de protection (10) étant de 0,15 mm ou moins, et la section de bouclier (10c) du couvercle de protection (10) étant formée de manière à ce qu'elle soit inclinée vers le côté externe par un angle incliné prédéterminé (θ) de telle manière que l'extrémité radialement vers l'intérieur de la section de bouclier (10c) est plus proche du côté externe.

2. Appareil de roulement pour roue selon la revendication 1 avec lequel la section de réduction radiale (10b) du couvercle de protection (10) a une configuration échelonnée dans sa section longitudinale.

3. Appareil de roulement pour roue selon la revendication 1 ou 2 avec lequel la section de réduction radiale (18b) du couvercle de protection (18) est pointue de sorte que son rayon est graduellement réduit vers la direction de côté interne.

4. Appareil de roulement pour roue selon l'une quelconque des revendications 1 à 3 avec lequel un élément de scellement (15) est collé de manière intégrée à la circonférence externe de la section de réduction radiale (10b) du couvercle de protection (10), l'élément de scellement (15) comprenant une section annulaire (15b) ayant un diamètre externe légèrement plus petit qu'un diamètre externe de la section d'ajustement (10a) du couvercle de protection (10) et une section projetée (15a) ayant un diamètre externe plus grand que celui de la section d'ajustement (10a), et la section projetée (15a) étant ajustée par pression dans la circonférence interne (2d) de l'extrémité de l'élément externe (2) via une interférence prédéterminée.

5. Appareil de roulement pour roue selon la revendication 4 avec lequel la dimension de l'élément de scellement (15) est réglée de sorte qu'il ne se projette pas au-delà de la surface de côté interne de la section de bouclier (10c) du couvercle de protection (10).

6. Appareil de roulement pour roue selon la revendication 4 ou 5 avec lequel le volume d'ajustement de la section projetée (15a) de l'élément de scellement (15) est réglé de sorte qu'il est plus petit qu'un volume d'un espace annulaire formé entre la section annulaire (15b) de l'élément de scellement (15) et la circonférence interne (2d) de l'élément externe (2) dans une condition dans laquelle un outil d'ajustement par pression jouxte l'élément de scellement (15).

7. Appareil de roulement pour roue selon l'une quelconque des revendications 4 à 6 avec lequel le diamètre interne (d2) de l'extrémité de la section d'ajustement (10a) du couvercle de protection (10) est réglé de sorte qu'il est plus petit que le diamètre externe (d3) de la surface d'extrémité de côté interne de l'élément de scellement (15).

8. Appareil de roulement pour roue selon la revendication 1 avec lequel une épaisseur de feuille (t2) de la section de bouclier (20a) du couvercle de protection (21) est plus petite qu'une épaisseur de feuille (t1) des autres sections.

9. Appareil de roulement pour roue selon l'une quelconque des revendications 1 à 8 avec lequel l'une des surfaces d'ajustement du couvercle de protection (27) et de l'élément externe (23) est formée avec une étape (δ) dans une direction radiale.

10. Appareil de roulement pour roue selon la revendication 9 avec lequel la hauteur de l'étape (δ) se situe dans une plage de 0,15 ∼ 0,30 mm.

11. Appareil de roulement pour roue selon la revendication 9 ou 10 avec lequel l'étape (δ) est formée sur l'extrémité (28a) de la section d'ajustement (27a) du couvercle de protection (27) par un travail par pression, et le diamètre externe (d1) de l'étape (δ) étant plus petit que le diamètre interne (d0) de la surface d'ajustement (24) de l'élément externe (23).

12. Appareil de roulement pour roue selon la revendication 9 ou 10 avec lequel l'extrémité (28a) de la section d'ajustement (27a) est formée comme une section de petit diamètre ayant un diamètre plus petit que le diamètre externe de la section d'ajustement (27a) par la hauteur de l'étape (δ).

13. Appareil de roulement pour roue selon l'une quelconque des revendications 9 à 12 avec lequel une largeur (L1) de l'étape (δ) du couvercle de protection (27) est plus grande qu'une largeur (L2) d'une section à cannelures (2e) de l'élément externe (23).

14. Appareil de roulement pour roue selon la revendication 9 ou 10 avec lequel une section de guidage (39a) est formée sur la circonférence interne de l'extrémité de l'élément externe (39), et un diamètre interne (d4) de la section de guidage (39a) étant plus grand qu'un diamètre externe (d5) de la section d'ajustement (40a) du couvercle de protection (40).

15. Appareil de roulement pour roue selon la revendication 14 avec lequel une section de transition (41) entre la surface d'ajustement (2d) et la section de guidage (39a) de l'élément externe (39) est formée comme ayant une section longitudinale à arc circulaire ayant un rayon de courbure (R1), et les surfaces du circuit externe (23a), la surface d'ajustement (2d) et la section de transition (41) étant simultanément broyées par une roue de broyage formée (42).
